# EUROPÄISCHE PATENTSCHRIFT

(11) **EP 4 650 886 B1**
(45) Veröffentlichungstag und Bekanntmachung des Hinweises auf die Patenterteilung: **11.03.2026**
(21) Anmeldenummer: 24176635.1
(22) Anmeldetag: 17.05.2024
(51) Int. Cl.: G05B 9/02, G05B 19/418, G05B 19/042

(54) **SICHERHEITSVORRICHTUNGEN UND SICHERHEITSVERFAHREN**
SECURITY DEVICES AND SECURITY METHODS
DISPOSITIFS ET PROCÉDÉS DE SÉCURITÉ

(43) Veröffentlichungstag der Anmeldung: 19.11.2025
(73) Patentinhaber: SICK AG, 79183 Waldkirch (DE)
(72) Erfinder: Liegibel, Pascal, 79183 Waldkirch (DE); Neumann, Thomas, 79183 Waldkirch (DE); Arockiaraj, Alfred, 79183 Waldkirch (DE); Hofmann, Christoph, 79183 Waldkirch (DE)
(74) Vertreter: Manitz Finsterwald Patent- und Rechtsanwaltspartnerschaft mbB

(56) Entgegenhaltungen:
- EP-A1- 4 040 034
- EP-A2- 3 919 991
- US-A1- 2022 404 804
- US-A1- 2023 004 148

## Beschreibung

Die Erfindung betrifft Sicherheitsvorrichtungen und Sicherheitsverfahren.

Die Sicherheitstechnik befasst sich mit dem Personenschutz beziehungsweise der Vermeidung von Unfällen mit Maschinen. Eine gattungsgemäße Sicherheitsvorrichtung nutzt einen oder mehrere Sensoren, um eine Maschine beziehungsweise deren Umgebung zu überwachen und sie bei drohender Gefahr rechtzeitig in einen sicheren Zustand zu versetzen. Eine typische herkömmliche sicherheitstechnische Lösung überwacht mit dem mindestens einen Sensor, etwa mittels eines Laserscanners, ein Schutzfeld, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. Es gibt alternative Schutzkonzepte, wie das sogenannte Speed-and-Separation-Monitoring, bei dem die Abstände und Geschwindigkeiten der erfassten Objekte in der Umgebung bewertet und im Gefahrenfalle reagiert wird.

**In** der Sicherheitstechnik ist eine besondere Verlässlichkeit gefordert, und deshalb sind hohe Sicherheitsanforderungen zu erfüllen, beispielsweise die Norm EN13849 für Maschinensicherheit und die Gerätenorm EN61496 für berührungslos wirkende Schutzeinrichtungen (BWS). Einige typische Maßnahmen dafür sind eine sichere elektronische Auswertung durch redundante, diversitäre Elektronik oder verschiedene Funktionsüberwachungen, etwa die Überwachung der Verschmutzung optischer Bauteile einschließlich einer Frontscheibe. Etwas allgemeiner sind wohldefinierte Fehlerbeherrschungsmaßnahmen nachzuweisen, damit mögliche sicherheitskritische Fehler entlang der Signalkette von dem Sensor über die Auswertung bis zur Einleitung der sicherheitstechnischen Reaktion vermieden oder kontrolliert werden.

Aufgrund der hohen Anforderungen an Hardware und Software in der Sicherheitstechnik werden bislang in erster Linie monolithische Architekturen eingesetzt, mit spezifisch entwickelter Hardware, die Redundanzen und Funktionsüberwachung durch Mehrkanaligkeit und Testmöglichkeiten vorsieht. Entsprechend werden Nachweise korrekter Algorithmen etwa nach IEC TS 62998, IEC-61508-3 geführt, und der Entwicklungsprozess der Software unterliegt permanenten strengen Tests und Überprüfungen. Ein Beispiel hierfür ist ein Sicherheitslaserscanner wie beispielsweise erstmals aus DE 43 40 756 A1 bekannt und in seinen Grundzügen bis heute weit verbreitet eingesetzt. Dort ist die gesamte Auswertungsfunktionalität integriert, einschließlich der Lichtlaufzeitmessung zur Abstandsbestimmung und der Objekterfassung in konfigurierten Schutzfeldern. Das Ergebnis ist ein fertig ausgewertetes binäres Absicherungssignal an einem zweikanaligen Ausgang (OSSD, Output Signal Switching Device) des Laserscanners, das im Falle eines Schutzfeldeingriffs die Maschine stoppt. Auch wenn sich dieses Konzept bewährt hat, bleibt es unflexibel, da Änderungen praktisch nur durch Neuentwicklung eines Nachfolgemodells des Laserscanners möglich sind.

In einigen herkömmlichen Sicherheitsanwendungen wird zumindest ein Teil der Auswertung aus dem Sensor in eine programmierbare Steuerung ausgelagert (SPS, Speicherprogrammierbare Steuerung). Dafür sind aber besondere Sicherheitssteuerungen erforderlich, die selbst zur Fehlervermeidung und -aufdeckung mehrkanalige Strukturen und dergleichen aufweisen. Sie sind daher kostenaufwändig und bieten vergleichsweise wenig Speicher- und Rechenkapazitäten, die beispielsweise mit einer 3D-Bildverarbeitung völlig überfordert sind.

Die Verwendung von Standardsteuerungen wäre zwar unter Einbettung in die notwendigen Funktionsüberwachungen grundsätzlich denkbar, jedoch wird dies heutzutage im industriellen Umfeld kaum angewandt, da es aufwändigere Architekturen und Expertenwissen verlangt. Im Übrigen sind auch Standardsteuerungen oder SPS nur mit bestimmten Sprachen bei zum Teil sehr limitierendem Sprachraum programmierbar. Schon verhältnismäßig einfache Funktionsblöcke bedürfen erheblicher Entwicklungsaufwände und Laufzeitressourcen, so dass deren Implementierung in einer Standardsteuerung, erst recht unter Sicherheitsmaßnahmen wie Redundanzen, bei etwas komplexeren Anwendungen kaum realisierbar sind.

Die EP 3 709 106 A1 kombiniert in einem Sicherheitssystem eine Sicherheitssteuerung mit einer Standardsteuerung. Aufwändigere Berechnungen bleiben der Standardsteuerung überlassen, und deren Ergebnisse werden durch die Sicherheitssteuerung validiert. Die Sicherheitssteuerung greift aber dafür auf vorhandene sichere Daten eines sicheren Sensors zurück, was die möglichen Anwendungsszenarien einschränkt und zudem wiederum Expertenwissen fordert, um geeignete sichere Daten zu gewinnen und damit geeignet zu validieren. Zudem ist die Hardwarestruktur weiterhin fest vorgegeben und die Anwendung speziell darauf fest implementiert.

In vielen Fällen wäre es erwünscht, die Sicherheitsüberwachung mit einer Automatisierungsaufgabe zu kombinieren. So werden nicht nur Unfälle vermieden, sondern die eigentliche Aufgabe der Maschine wird ebenfalls automatisiert unterstützt. Bisher sind dafür aber meist völlig unterschiedliche Systeme und Sensoren im Einsatz. Das liegt unter anderem daran, dass ein Sicherheitssensor für eine Automatisierungsaufgabe viel zu teuer ist und umgekehrt die Komplexität eines Sicherheitssensors nicht durch weitere Funktionen überladen werden soll. Die EP 2 053 538 B1 erlaubt für eine 3D-Kamera die Definition von separaten Sicherheits- und Automatisierungsbereichen. Das ist aber nur ein erster Schritt, da zwar immerhin derselbe Sensor für die beiden Welten Sicherheit und Automatisierung verwendet wird, diese beiden Aufgaben dann aber doch räumlich und implementierungsseitig wieder eindeutig voneinander trennt. Die IEC 62998 ermöglicht die Koexistenz von Sicherheits- und Automatisierungsdaten, macht aber als Norm keinerlei konkrete Implementierungsvorschläge.

Außerhalb der Sicherheitstechnik gibt es längst sehr viel flexiblere Architekturen. Der monolithische Ansatz ist dort seit langem in mehreren Schritten moderneren Konzepten gewichen. Die frühere traditionelle Verteilung (Deployment) mit fester Hardware, auf der ein Betriebssystem die einzelnen Anwendungen koordiniert, hat zwar weiterhin ihre Berechtigung in Standalone-Geräten, genügt aber in einer vernetzten Welt längst nicht mehr. Der Grundgedanke in der Weiterentwicklung war das Einziehen von zusätzlichen Schichten, die von der konkreten Hardware immer weiter abstrahieren.

Ein erster Schritt sind die sogenannten virtuellen Maschinen, wo die zusätzliche Schicht als Hypervisor oder Virtual Machine Monitor bezeichnet ist. Solche Ansätze werden in-zwischen auch zaghaft in der Sicherheitstechnik verfolgt. So bietet etwa die EP 3 179 278 B1 in einem Sicherheitssensor eine geschützte Umgebung an, um dem Anwender zu erlauben, eigene Programmbausteine auf dem Sicherheitssensor ablaufen zu lassen.

Solche Programmbausteine sind dann aber sorgfältig von der Sicherheitsfunktionalität getrennt und tragen dazu nichts bei.

Eine weitergehende Abstraktion basiert auf sogenannten Containern (Containervirtualisierung, Containering). Ein Container ist quasi eine kleine virtuelle Kapsel für eine Softwareanwendung, die eine vollständige Umgebung für deren Ablauf einschließlich Speicherbereichen, Bibliotheken und dergleichen bietet. Die zugehörige abstrahierende Schicht oder Laufzeitumgebung wird container runtime genannt. Damit kann die Softwareanwendung unabhängig von der praktisch beliebigen Hardware entwickelt werden, auf der sie später abläuft. Container werden häufig mit Hilfe von Docker umgesetzt.

In einer modernen IoT-Architektur (Internet of Things, Industrial Internet of Things) wird eine Vielzahl von Containern mit unterschiedlichsten Softwareanwendungen zusammengeführt. Diese Container müssen geeignet koordiniert werden, was in diesem Zusammenhang als Orchestrieren bezeichnet wird und wofür ein sogenannter orchestration layer als weitere Abstraktion hinzukommt. Für die Container-Orchestrierung setzt sich zunehmend Kubernetes durch, daneben sind Alternativen wie Docker Swarm als Erweiterung von Docker sowie rkt oder LXC bekannt.

Der Einsatz solcher modernen, abstrahierenden Architekturen in der Sicherheitstechnik scheitert bislang an den hohen Hürden der Sicherheitsnormen und der entsprechend konservativen Herangehensweise im Anwendungsfeld der funktionalen Sicherheit. Allgemein im industriellen Umfeld werden Containertechnologien durchaus verfolgt, und beispielsweise in der Automobilindustrie gibt es Pläne für den Einsatz von Kubernetes-Architekturen, und auch die Luftwaffe verfolgt derlei Ansätze. Dies alles zielt aber nicht auf die funktionale Sicherheit und löst somit die genannten Probleme nicht.

Zwar ist eine hohe Verfügbarkeit auch in einer üblichen IoT-Welt erwünscht, aber diese Form der Ausfallsicherheit ist längst noch nicht mit dem vergleichbar, was die Sicherheitsnormen fordern. Für den Sicherheitstechniker sind daher Edge- oder Cloudanwendungen für eine normgerechte Sicherheit bisher undenkbar. Es widerspricht dem verbreiteten Denken, für reproduzierbare Bedingungen zu sorgen und sich gegen alle unter diesen Bedingungen vorstellbaren Möglichkeiten einer Fehlfunktion zu wappnen. Eine weitgehende Abstraktion oder Virtualisierung schafft eine zusätzliche Ungewissheit, die bislang mit den Sicherheitsanforderungen unvereinbar erscheint.

Bei digitalen Industrieanwendungen besteht immer ein Spannungsverhältnis zwischen einer Vielzahl verfügbarer funktional unsicherer Lösungen und der funktionalen Sicherheit. Cloud Native könnte ein Ansatz zur Behandlung dieses Spannungsfeldes sein. Cloud-native Technologien bieten neben praktisch unbegrenzter Rechenleistung auch Konzepte wie Observability und Resiliency, die den Anforderungen an Sicherheitslösungen ähneln. Diese Cloud-nativen Konzepte können durch bestehende Open-Source-Frameworks und Tools realisiert werden, die für große (nicht funktional sichere) Anwendungen konzipiert sind. Die Kombination dieser Frameworks und Tools mit etablierten Sicherheitsansätzen kann funktionale Sicherheit für Cloud-native Anwendungen ermöglichen.

Die EP 4 040 034 A1 stellt eine Sicherheitsvorrichtung und ein Sicherheitsverfahren zur Überwachung einer Maschine vor, bei dem mit den genannten Container- und Orchestrierungstechnologien die Sicherheitsfunktionalität von der unterliegenden Hardware abstrahiert werden kann. Es werden Logikeinheiten nach Bedarf erzeugt, aufgelöst oder anderer Hardware zugewiesen. Das ermöglicht variable Grade der Redundanz und eine flexible gegenseitige Überwachung von Logikeinheiten. Für das Testen und Überwachen werden spezielle, als Diagnoseeinheiten ausgebildete Logikeinheiten vorgeschlagen. Die EP 4 040 034 A1 erklärt aber nicht, wie eine spezifische Sicherheitsaufgabe berücksichtigt werden kann.

EP 3 919 991 A2 offenbart ein verteiltes Gebäudemanagementsystem mit einem virtuellen Controller und einem Edge-Controller zur Steuerung eines Gebäudesteuerungsgeräts mithilfe einer verteilten Steuerlogik, die zwischen dem virtuellen Controller und dem Edge-Controller verteilt ist. Ein Programmiertool zeigt eine grafische Darstellung der verteilten Steuerlogik an und identifiziert, welche Teile der verteilten Steuerlogik als kritisch und welche als nicht kritisch für den ausfallsicheren Betrieb des Gebäudesteuerungsgeräts gelten, falls der Edge-Controller keine Steuerbefehle mehr vom virtuellen Controller empfängt. Die als kritisch identifizierten Teile der verteilten Steuerlogik werden dem Edge-Controller zur Ausführung zugewiesen, die nicht als kritisch identifizierten Teile der verteilten Steuerlogik werden dem virtuellen Controller zur Ausführung zugewiesen.

US 2022/404804 A1 offenbart ein software-definiertes (SD) Prozesssteuerungssystem (SDCS), welches einen Steuerungscontainer beinhaltet mit Inhalten, die während der Laufzeit der Prozessanlage ausführbar sind, um mindestens einen Bereich eines industriellen Prozesses zu steuern. Das SDCS beinhaltet auch einen Sicherheitsdienst, der mit dem Steuerungscontainer verbunden ist und Inhalte beinhaltet, die eine oder mehrere Sicherheitsbedingungen definieren. Der Sicherheitsdienst wird über einen Container auf einem Rechenknoten des SDCS ausgeführt, um den Zugriff auf und/oder den Datenfluss von dem Steuerungscontainer auf der Grundlage des Inhalts des Sicherheitscontainers zu steuern.

Es ist Aufgabe der Erfindung, Vorrichtungen und Verfahren bereitzustellen, die auf spezifische Sicherheitsaufgaben eingehen können.

Die Lösung der Aufgabe erfolgt durch eine Sicherheitsvorrichtung mit den Merkmalen des Anspruchs 1 und ein Sicherheitsverfahren mit den Merkmalen des Anspruchs 11.

Eine erfindungsgemäße Sicherheitsvorrichtung zur Überwachung mindestens einer Maschine umfasst mindestens einen Sensor zum Erzeugen von Sensordaten zu der Maschine sowie eine mindestens mittelbar mit dem Sensor und der Maschine verbundene Verarbeitungseinheit für die Sensordaten, die als Ausführungsumgebung mit mindestens einem Rechenknoten sowie dafür ausgebildet ist, mindestens eine Logikeinheit auf dem Rechenknoten ablaufen zu lassen, wobei mindestens eine Logikeinheit mindestens eine Sicherheitsfunktionseinheit zur sicherheitsgerichteten Auswertung der Sensordaten umfasst, um im Falle eines sicherheitsrelevanten Ereignisses ein Sicherheitssignal an die Maschine zum Auslösen einer Sicherheitsreaktion auszugeben, wobei die Verarbeitungseinheit weiterhin dafür ausgebildet ist, basierend auf einer Sicherheitsaufgabe Logikeinheiten zu erzeugen, zu modifizieren, und/ oder aufzulösen; wobei die Sicherheitsvorrichtung ferner aufweist eine Überwachungsvorrichtung, eingerichtet zum Sicherstellen einer Einhaltung von Sicherheitscodierungsrichtlinien, und/ oder Ermitteln von sicherheitsrelevanten Informationen, und/ oder Bereitstellen von Schnittstellen für jede Sicherheitsfunktionseinheit; wobei die Sicherheitsvorrichtung weiterhin dafür ausgebildet ist, Überwachungsvorrichtungen dynamisch zu erzeugen, hinzuzufügen, oder zu entfernen; und wobei die Sicherheitsvorrichtung weiterhin dafür ausgebildet ist, Ressourcen für sicherheitsrelevante Aufgaben zu validieren.

Die für das Erzeugen, Modifizieren, und/ oder Auflösen von Logikeinheiten basierend auf einer Sicherheitsaufgabe ausgebildete Einheit kann als "Automated resource orchestrator" (automatisierter Ressourcen-Orchestrator; ARO) bezeichnet werden und ist weiter unten detailliert beschrieben.

Beispielsweise kann, basierend auf der Sicherheitsaufgabe, das Container Image geändert wird, ohne die inhaltliche Logik selbst zu ändern.

Beispielsweise kann eine einfache Überwachung des Abstands einer Person zu einem Roboter mithilfe eines Sensors bereitgestellt werden. Die Logik (also die Auswertung, um den Abstand zum Roboter mit einem Grenzwert zu vergleichen) in Container Image A kann durch einfache Sicherheitsmechanismen wie einer Speicherüberprüfung implementiert sein. Container Image B kann mithilfe fortgeschrittener Technologien, wie bspw. Software Coded Processing, implementiert sein. Die Logik selbst kann gleich bleiben, und die Modifizierung kann basierend auf den Anforderungen der Sicherheitsaufgabe erfolgen.

In einer Ausgestaltung kann die Sicherheitsaufgabe benutzerdefiniert sein.

In verschiedenen Ausführungsformen kann die Sicherheitsaufgabe zur Laufzeit der Sicherheitsvorrichtung ermittelt werden.

Die die Logikeinheiten können basierend auf der Sicherheitsaufgabe erzeugt, modifiziert, und/ oder aufgelöst werden durch einen automatisierten Ressourcen-Orchestrator, der innerhalb der Ausführungsumgebung bereitgestellt ist, oder durch einen automatisierten Ressourcen-Orchestrator, der außerhalb der Ausführungsumgebung (22) bereitgestellt ist (in anderen Worten: einen "Standalone" ARO).

Die Sicherheitsvorrichtung kann ferner aufweisen eine Schnittstelle zur Modellierung einer Schutzaufgabe als atomare Einheit. Die Schnittstelle kann mittels einem "Domain Scoped Object" (DSO) bereitgestellt werden und ist weiter unten detailliert beschrieben.

Die Sicherheitsvorrichtung weist ferner eine Überwachungsvorrichtung auf, die eingerichtet ist zum Sicherstellen einer Einhaltung von Sicherheitscodierungsrichtlinien, und/ oder Ermitteln von sicherheitsrelevanten Informationen, und/ oder Bereitstellen von Schnittstellen für jede Sicherheitsfunktionseinheit. Die Überwachungsvorrichtung kann als "Safety watcher" bezeichnet werden und ist weiter unten detailliert beschrieben.

Die Sicherheitsvorrichtung ist weiterhin dafür ausgebildet, Überwachungsvorrichtungen dynamisch zu erzeugen, hinzuzufügen, oder zu entfernen. Dies kann durch eine logische Einheit für die Initialisierung (LU-I) ausgeführt werden und ist weiter unten detailliert beschrieben.

Die Sicherheitsvorrichtung ist weiterhin dafür ausgebildet, Ressourcen für sicherheitsrelevante Aufgaben zu validieren. Dies kann durch eine logische Einheit zur Validierung) LU-V ausgeführt werden und ist weiter unten detailliert beschrieben.

Die überwachte oder abzusichernde Maschine ist zunächst allgemein zu verstehen, es handelt sich beispielsweise um eine Bearbeitungsmaschine, eine Fertigungsstraße, eine Sortieranlage, eine Prozessanlage, einen Roboter oder ein Fahrzeug in zahlreichen Spielarten, wie schienengebunden oder nicht, geführt oder fahrerlos und dergleichen. Mindestens ein Sensor liefert Sensordaten zu der Maschine, d.h. Daten über die Maschine selbst, über das, mit dem sie interagiert, oder über deren Umgebung. Die Sensordaten sind zumindest teilweise sicherheitsrelevant, zusätzliche nicht sicherheitsrelevante Sensordaten für Automatisierungs- oder Komfortfunktionen sind denkbar. Die Sensoren können, müssen aber keine sicheren Sensoren sein, die Sicherheit kann erst nachgelagert gewährleistet werden.

Eine Verarbeitungseinheit fungiert als Ausführungsumgebung (welche auch als "Runtime Environment" bezeichnet werden kann). Die Verarbeitungseinheit ist somit das strukturelle Element, die Ausführungsumgebung dessen Funktion. Die Verarbeitungseinheit ist mindestens mittelbar mit dem Sensor und der Maschine verbunden. Sie hat demnach Zugriff auf die Sensordaten für deren Verarbeitung, möglicherweise indirekt über zwischengeschaltete weitere Einheiten, und kann mit der Maschine kommunizieren und insbesondere auf sie einwirken, vorzugsweise über eine Maschinensteuerung der Maschine. Die Verarbeitungseinheit oder Ausführungsumgebung bezeichnet als Sammelbegriff die Hardware und Software, mit der anhand der Sensordaten über das Erfordernis und vorzugsweise auch Art einer sicherheitsgerichteten Reaktion der Maschine entschieden wird.

Die Verarbeitungseinheit umfasst mindestens einen Rechenknoten. Das ist eine digitale Rechenvorrichtung beziehungsweise ein Hardwareknoten oder ein Teil davon, der Rechen- und Speicherkapazitäten zum Ausführen eines Softwarefunktionsblocks zur Verfügung stellt. Allerdings muss nicht jeder Rechenknoten zwangsläufig ein separater Hardwarebaustein sein, es können beispielsweise durch Verwendung von Multiprozessoren mehrere Rechenknoten auf demselben Gerät realisiert sein, und umgekehrt kann ein Rechenknoten unterschiedliche Hardwareressourcen bündeln.

Auf dem Rechenknoten oder einem der Rechenknoten laufen im Betrieb der Sicherheitsvorrichtung mehrere Logikeinheiten ab. Eine Logikeinheit (welche auch als "Logic Unit" bezeichnet werden kann) bezeichnet demnach allgemein einen Softwarefunktionsblock. Eine Logikeinheit kann beispielsweise als Container, der innerhalb von Kubernetes läuft, ausgestaltet sein. Erfindungsgemäß ist mindestens eine Logikeinheit als Sicherheitsfunktionseinheit ausgebildet, die eine sicherheitsgerichtete Auswertung der Sensordaten leistet. Ziel der sicherheitsgerichteten Auswertung ist der Personenschutz beziehungsweise eine Unfallvermeidung, indem anhand der Sensordaten festgestellt wird, ob eine Gefahr droht beziehungsweise ein sicherheitsrelevantes Ereignis erkannt wurde. Das ist beispielsweise bei Erfassung einer Person zu nahe an der Machine oder in einem Schutzfeld der Fall. An der sicherheitsgerichteten Auswertung können eine oder mehrere Logikeinheiten beteiligt sein. Im Falle eines sicherheitsrelevanten Ereignisses wird vorzugsweise ein Sicherheitssignal an die Maschine ausgegeben, um dort eine sicherheitsgerichtete Reaktion auszulösen, mit der die Maschine in einen sicheren Zustand versetzt wird, der die Gefahr beseitigt oder wenigstens auf ein hinnehmbares Niveau absenkt. Weiterhin ist mindestens eine Logikeinheit als Diagnoseeinheit ausgebildet. Damit wird die Funktion anderer Logikeinheiten und insbesondere der mindestens einen Sicherheitsfunktionseinheit auf Fehler hin überwacht.

Der erfindungsgemäße Ansatz ist radikal anders als herkömmlich in der Sicherheitstechnik. Bisher wird eine feste Hardwarestruktur vorgegeben, meist eigens für genau diese Sicherheitsfunktion entwickelt, und die Softwarefunktionalität ist für genau diese Hardwarestruktur entwickelt, dort fest implementiert und getestet. Eine nachträgliche Veränderung der Softwareverteilung (deployment) ist ausgeschlossen, und das gilt erst recht durch eine Veränderung der zugrundeliegenden Hardware. Derartige Modifikationen erfordern herkömmlich zumindest einen aufwändigen Umbau durch einen Sicherheitsexperten, in der Regel eine komplette Neuentwicklung. Ein Ausfluss der typischen konservativen Herangehensweise in der Industrie und erst recht in der Sicherheitstechnik ist, dass selbst Firmware- oder Softwareupdates von Sensoren und Steuerungen äußerstenfalls in langen Zyklen und typischerweise gar nicht vorgenommen werden.

In dieser Beschreibung werden immer wieder die Begriffe Sicherheit oder sicher verwendet. Das ist vorzugsweise jeweils im Sinne einer Sicherheitsnorm zu verstehen. Es wird demnach eine Sicherheitsnorm beispielsweise für Maschinensicherheit, berührungslos wirkende Schutzeinrichtungen oder Unfallvermeidung im Personenschutz erfüllt, oder es werden nochmals etwas anders formuliert durch Normen definierte Sicherheitsniveaus eingehalten, folglich jeweils Fehler bis zu einem in der Sicherheitsnorm oder analog dazu spezifizierten Sicherheitsniveau beherrscht. Einleitend sind einige Beispiele solcher Sicherheitsnormen genannt, wo die Sicherheitsniveaus beispielsweise als Schutzklassen oder Performance Level bezeichnet sind. Die Erfindung ist nicht auf eine bestimmte dieser Sicherheitsnormen festgelegt, die sich in ihrer konkreten Nummerierung und Formulierung regional und im Laufe der Zeit ändern können, nicht aber in ihren grundlegenden Prinzipien zur Schaffung von Sicherheit

Später wird in einigen Ausführungsformen der Sicherheitsbegriff etwas erweitert auf eine kontextbezogene oder situative Sicherheit.

Die Implementierung der Ausführungsumgebung erfolgt vorzugsweise in Kubernetes. Dort wird die Ausführungsumgebung als "Control plane" bezeichnet. Ein Master koordiniert die allgemeinen Abläufe beziehungsweise die Orchestrierung (orchestration layer). Rechenknoten heißen in Kubernetes Nodes, und sie weisen mindestens einen Unterknoten oder Pod auf, in dem die Logikeinheiten in jeweiligen Containern ablaufen. Kubernetes kennt bereits Mechanismen, mit denen geprüft wird, ob eine Logikeinheit noch arbeitet. Diese Überprüfung genügt jedoch keinerlei sicherheitsspezifischen Anforderungen und beschränkt sich im Wesentlichen darauf, hin und wieder ein Lebenszeichen zu erhalten und womöglich einen Container neu zu starten. Dabei gibt es keinerlei Garantien, wann der Fehler auffällt und wieder behoben ist.

Die Ausführungsumgebung ist vorzugsweise dafür ausgebildet, Logikeinheiten zu erzeugen, aufzulösen und einem Rechenknoten zuzuweisen beziehungsweise sie zwischen Rechenknoten zu verschieben. Das geschieht vorzugsweise nicht nur einmalig, sondern auch dynamisch während des Betriebs, und es betrifft ganz ausdrücklich auch die sicherheitsrelevanten Logikeinheiten, also die mindestens eine Sicherheitsfunktionseinheit und/oder die Diagnoseeinheit. Die Verknüpfung zwischen Hardware und Auswertung wird damit unter Wahrung der funktionalen Sicherheit fließend. Herkömmlich hingegen werden sämtliche Sicherheitsfunktionen fest und unveränderlich auf dedizierter Hardware implementiert. Eine Veränderung, soweit überhaupt ohne Umbau oder Neuentwicklung darstellbar, würde als völlig unverträglich mit dem zugrundeliegenden Sicherheitskonzept angesehen. Das gilt schon für eine einmalige Implementierung und erst recht dynamische Änderungen zur Laufzeit. Im Gegenteil wurde bisher stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Die Ausführungsumgebung ist bevorzugt dafür ausgebildet, die einer Logikeinheit zugewiesenen Ressourcen zu verändern. Dies kann die Logikeinheit bei einer schnelleren Verarbeitung unterstützen, aber auch Ressourcen für andere Logikeinheiten freistellen. Besondere Möglichkeiten, um mehr Ressourcen bereitzustellen, sind die Verschiebung einer Logikeinheit auf einen anderen Rechenknoten oder die Erzeugung einer weiteren Instanz oder Kopie der Logikeinheit, wobei eine Logikeinheit für letzteres bevorzugt für eine parallelisierbare Ausführung ausgebildet ist.

Die Ausführungsumgebung hält bevorzugt eine Konfigurationsinformation oder Konfigurationsdatei über die Logikeinheiten gespeichert. Anhand der Konfigurationsinformation wird Buch über die vorhandenen Logikeinheiten geführt beziehungsweise vorgegeben, welche Logikeinheiten in welchem Zeitablauf und mit welchen Ressourcen ausgeführt werden sollen und wie sie möglicherweise miteinander in Beziehung stehen.

Die Konfigurationsinformation ist besonders bevorzugt mittels Signaturen oder Blockchain-Datensätzen gegen Manipulation gesichert.

Eine solche Manipulation kann absichtlich oder unabsichtlich sein, jedenfalls sollte sich in einer Sicherheitsanwendung die Konfiguration der Logikdateien keinesfalls unbemerkt verändern.

Die Ausführungsumgebung weist bevorzugt mindestens eine Mastereinheit auf, die mit den Rechenknoten kommuniziert und sie koordiniert. Die Mastereinheit kann für Redundanz und/oder verteilte Zuständigkeit auch mehrere Untereinheiten aufweisen oder von Knotenmanagereinheiten der Rechenknoten unterstützt werden und auf einem eigenen Rechenknoten oder einem Rechenknoten gemeinsam mit Logikeinheiten implementiert sein.

Der mindestens eine Rechenknoten weist bevorzugt eine Knotenmanagereinheit zur Kommunikation mit anderen Rechenknoten und der Ausführungsumgebung auf. Diese Knotenmanagereinheit ist für die Verwaltung und Koordinaten des zugehörigen Rechenknotens, insbesondere die Logikeinheiten dieses Rechenknotens sowie für das Zusammenspiel mit den anderen Rechenknoten und der Mastereinheit verantwortlich. Sie kann in praktisch beliebiger Verteilung auch Aufgaben der Mastereinheit übernehmen.

Der mindestens eine Rechenknoten weist bevorzugt mindestens einen Unterknoten auf, und die Logikeinheiten sind einem Unterknoten zugeordnet. Damit werden die Rechenknoten ein weiteres Mal in sich strukturiert, um Logikeinheiten in einem Unterknoten zusammenzufassen. Dieses Konzept verfolgt auch Kubernetes in Form der Pods.

Die mindestens eine Logikeinheit ist bevorzugt als Container implementiert. Damit sind die Logikeinheiten abgekapselt oder containerisiert und werden auf nahezu beliebiger Hardware lauffähig. Der sonst übliche enge Zusammenhang zwischen Sicherheitsfunktion und deren Implementierung auf fester Hardware ist aufgebrochen, womit sich die Flexibilität und Prozessstabilität ganz erheblich erhöht. Die Ausführungsumgebung koordiniert oder orchestriert die Container mit den darin befindlichen Logikeinheiten untereinander. Es gibt mindestens zwei Abstraktionsschichten, einmal eine jeweilige Containerschicht (container runtime) und zum zweiten eine darüber liegende Orchestrierungsschicht (orchestration layer) der Ausführungsumgebung.

Die Ausführungsumgebung ist bevorzugt auf mindestens einem Sensor, einer speicherprogrammierbaren Steuerung, einer Maschinensteuerung, einer Rechnervorrichtung in einem lokalen Netzwerk, einem Edge-Device und/oder in einer Cloud implementiert. Die zugrundeliegende Hardwarelandschaft ist mit anderen Worten praktisch beliebig, was ein ganz großer Vorteil des erfindungsgemäßen Ansatzes ist. Die Ausführungsumgebung arbeitet abstrakt mit Rechenknoten, die darunterliegende Hardware kann sich sehr heterogen zusammensetzen. Insbesondere werden der Sicherheitstechnik auch Edge- oder Cloud-Architekturen zugänglich, ohne dabei auf die vertraute Auswertungshardware von (sicheren) Sensoren oder Steuerungen verzichten zu müssen.

Die Ausführungsumgebung ist bevorzugt dafür ausgebildet, Rechenknoten einzubinden und/oder auszuschließen. Die Hardwareumgebung darf sich damit ändern, die Ausführungsumgebung ist in der Lage, damit umzugehen und neue oder angepasste Rechenknoten zu bilden. Es ist demnach möglich, neue Hardware anzuschließen oder Hardware auszutauschen, insbesondere zum Ersatz bei (Teil-)ausfall sowie zum Aufrüsten und zur Bereitstellung zusätzlicher Rechen- und Speicherressourcen. Die Logikeinheiten können auf den von der Ausführungsumgebung abstrahierten Rechenknoten trotz einer möglicherweise auch rabiat veränderten Hardwarekonfiguration weiterarbeiten.

Im Gegenteil wird stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Vorteilhafterweise ist eine Sicherheitsfunktionseinheit dafür ausgebildet, dynamisch ein erforderliches oder erreichbares Sicherheitsniveau für die Sicherheitsvorrichtung zu bestimmen. Die Bestimmung eines erforderlichen Sicherheitsniveaus kann im Rahmen einer verhaltensgetriebenen Risikoanalyse erfolgen (BDRA, Behavior driven risk assessment). Dabei wird einer Sicherheitsvorrichtung nicht länger ein fixes Sicherheitsniveau zugewiesen, sondern situativ entschieden, welches Sicherheitsniveau gerade jetzt erforderlich ist. Das entscheidet die Sicherheitsfunktionseinheit anhand der Sensordaten und gegebenenfalls weiterer Daten, etwa einem von einer Maschinensteuerung kommunizierten Arbeitsmodus. Umgekehrt ist auch denkbar, dass die Sicherheitsfunktionseinheit feststellt, welches Sicherheitsniveau die Sicherheitsvorrichtung in ihrer derzeitigen Konfiguration zur Verfügung stellt. Das erzwingt natürlich dann, wenn dieses erreichbare Sicherheitsniveau niedriger ausfällt als das erforderliche Sicherheitsniveau, eine sicherheitsgerichtete Reaktion, die aber womöglich milder ausfällt als ein sofortiger Nothalt. Mit dem erreichbaren Sicherheitsniveau sind beispielsweise bestimmte Arbeitsmodi wie eine langsamere Roboterbewegung oder eine Schleichfahrt eines Fahrzeugs noch zulässig, so dass zumindest eine gewisse Produktivität noch aufrechterhalten werden kann.

Die Ausführungsumgebung ist bevorzugt dafür ausgebildet, das Sicherheitsniveau der Sicherheitsvorrichtung dynamisch durch mindestens eine der Maßnahmen Änderung von Testzyklen, Änderung von Redundanz und/oder Änderung von Diversität anzupassen. Das neu erreichte Sicherheitsniveau kann von außen vorgegeben oder wie im Vorabsatz beschrieben dynamisch bestimmt worden sein. Es gibt verschiedene Stellschrauben zur Anpassung des Sicherheitsniveaus, nämlich erstens die Länge von Testzyklen, nach denen Tests wiederholt werden, oder etwas allgemeiner die Zeitpunkte, zu denen eine Diagnoseeinheit eine Sicherheitsfunktionseinheit testet oder überwacht, zweitens die Vielfachheit einer Redundanz oder die Anzahl der für die Ausführung einer Sicherheitsfunktion zuständigen Logikeinheiten und/oder drittens die Diversität, die durch Implementierung von für eine Sicherheitsfunktion zuständigen Logikeinheit auf gleichen oder unterschiedlichen Unterknoten oder Rechenknoten entsteht. Das Sicherheitsniveau wird mittels mindestens einer dieser Stellschrauben geändert. Eine weitere denkbare Stellschraube tausch für bestimmte Aufgaben zuständige Logikmodule aus, etwa eine einfache Sicherheitsfunktionseinheit oder Diagnoseeinheit gegen eine komplexe Sicherheitsfunktionseinheit beziehungsweise Diagnoseeinheit oder umgekehrt.

Testzyklen können lang oder kurz sein. Das wird wahlweise durch Zeiten vorgegeben, etwa ein Test alle x Millisekunden, oder an den Messzyklen des Sensors beziehungsweise den Auswertungszyklen der Sensordaten festgemacht. Es können m Testzyklen für n Mess- oder Auswertungszyklen festgelegt sein, und das Verhältnis m:n mit typischerweise m>n bis hin zu m=n=1 legt die gewünschte Häufigkeit fest. Denkbar ist auch ein sogenannter Test vor Anforderung, der weniger in regelmäßigen Zyklen, sondern eher ereignisbasiert abläuft.

Eine Redundanz kann gar nicht vorgesehen sein, oder es werden zwei oder mehr Kopien oder Instanzen von sicherheitsrelevanten Logikeinheiten erzeugt. Das ergibt dann effektiv eine entsprechende Mehrkanaligkeit der Auswertung.

Diversität entsteht, wenn redundante Logikeinheiten oder auch nur eine Sicherheitsfunktionseinheit und ihre zugehörige Diagnoseeinheit auf unterschiedlichen Unterknoten oder vorzugsweise unterschiedlichen Rechenknoten implementiert werden. Dabei wird die Diversität umso größer, auf je mehr Unter- oder Rechenknoten sich die Logikeinheiten verteilen. Es handelt sich hier um eine spezielle Form der Diversität, die sich vor allem an der Hardware festmacht. Um überhaupt auf der unterschiedlichen Hardware lauffähig zu sein, unterscheidet sich natürlich auch die Software, aber diese Unterschiede sind erfindungsgemäß von der eigentlichen Logikeinheit abstrahiert oder abgekapselt und werden von der Ausführungsumgebung und insbesondere deren Containerbeziehungsweise Orchestrierungsschicht getragen. Dennoch können durchaus auch solche Softwareunterschiede zu einer nützlichen Diversität beitragen. Darüber hinaus könnte noch mehr Diversität durch unterschiedliche Implementierungen oder gar Algorithmen innerhalb der Logikeinheiten geschaffen werden. Das ist zwar vorteilhaft mit der Erfindung kombinierbar, kann aber die Ausführungsumgebung selbst nicht leisten, das liegt in der Verantwortung der individuellen Programmierung von Logikeinheiten. Eine gewisse zusätzliche Diversität könnte noch die Verwendung unterschiedlicher Compiler und dergleichen automatisierbare Variation schaffen.

Die Ausführungsumgebung ist bevorzugt dafür ausgebildet, das Sicherheitsniveau der Sicherheitsvorrichtung einzustellen auf:
- niedrig: eine Sicherheitsfunktion ist nur einfach in einer sicherheitsrelevanten Logikeinheit implementiert, eine Diagnose erfolgt nur mit jedem n-ten Sensorzyklus oder vor Anforderung,
- mittel: eine Sicherheitsfunktion ist nur einfach in einer sicherheitsrelevanten Logikeinheit implementiert, eine Diagnose erfolgt in kurzen Zyklen, insbesondere mit jedem Sensorzyklus,
- hoch: eine Sicherheitsfunktion ist redundant in zwei sicherheitsrelevanten Logikeinheiten implementiert, eine Diagnose erfolgt in kurzen Zyklen, insbesondere mit jedem Sensorzyklus, und die Diagnosen werden verglichen oder
- sehr hoch: eine Sicherheitsfunktion ist redundant in mindestens drei sicherheitsrelevanten Logikeinheiten implementiert, eine Diagnose erfolgt in kurzen Zyklen, insbesondere mit jedem Sensorzyklus, und die Diagnosen werden verglichen.

Für ein niedriges und mittleres Sicherheitsniveau wird somit auf Redundanz ganz verzichtet, und es wird nur die Häufigkeit der Tests angepasst, oder auch deren Komplexität. Bei einem hohen Sicherheitsniveau kommt eine zweikanalige Redundanz mit gegenseitige Diagnose hinzu, bei einem sehr hohen Sicherheitsniveau sogar eine noch höhere Redundanz. Darüber hinaus könnte eine Diversität durch Zuweisung auf verschiedene Unterknoten oder Rechenknoten erreicht werden. Dies ist ein Beispielkatalog für eine konkrete Verwendung der vorgestellten drei Stellschrauben Testzyklen, Redundanz und Diversität zum Erreichen verschiedener Sicherheitsniveaus. Es sind feinere, grobere und andere Abstufungen der Sicherheitsniveaus denkbar, insbesondere durch andere Kombinationen der jeweiligen Verwendung einer Stellschraube. So kann beispielsweise eine hohe Redundanz und/oder Diversität durchaus auch mit langsamen Testzyklen kombiniert werden.

Mindestens eine Logikeinheit ist bevorzugt als Automatisierungseinheit ausgebildet, die aus den Sensordaten eine für eine Automatisierungsaufgabe relevante Information und/oder einen Steuerungsbefehl für die Maschine erzeugt, wobei Information und Steuerungsbefehl nicht sicherheitsrelevant sind. Die Automatisierungseinheit (welches auch als "automation unit" bezeichnet werden kann), ist eine Logikeinheit, welche eine Automatisierungsaufgabe ausführt. Die Ausführungsumgebung unterstützt somit eine weitere Art von Logikeinheit, die anhand der Sensordaten nicht sicherheitsrelevante Zusatzfunktionen bietet. Es geht bei solchen Automatisierungsaufgaben nicht um den Personenschutz oder die Unfallvermeidung, und demgemäß müssen insoweit keine Sicherheitsnormen erfüllt werden. Typische Automatisierungsaufgaben sind Qualitäts- und Ablaufkontrollen, Objekterkennung zum Greifen, Sortieren oder für sonstige Bearbeitungsschritte, Klassifikationen und dergleichen. Auch eine Automatisierungseinheit profitiert davon, wenn die Ausführungsumgebung ihr flexible Ressourcen zuweist und sie daraufhin überwacht, ob sie ihre Aufgabe noch ausführt, und beispielsweise gegebenenfalls die entsprechende Logikeinheit neu startet, auf einen anderen Rechenknoten schiebt oder eine Kopie der Logikeinheit ins Leben ruft. Dabei geht es dann aber um Verfügbarkeit mit Vermeidung von Stillständen und der Unterstützung ordnungsgemäßer Abläufe, die für den Betreiber der Maschine durchaus sehr relevant sind, aber nichts mit Sicherheit zu tun haben. Es ist denkbar, eine Automatisierungseinheit in die Zustands- und Ausführungsüberwachung der Diagnoseeinheit einzubinden, da verlässliche Automatisierungsfunktionen ebenfalls einen Mehrwert bieten können, auch wenn damit ein Sicherheitsniveau eingehalten wird, das an dieser Stelle womöglich zu hoch ist.

Der mindestens eine Sensor ist bevorzugt als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet, insbesondere Temperatur-, Durchfluss-, Füllstand- oder Drucksensor, wobei die Sicherheitsvorrichtung insbesondere eine Vielzahl gleicher oder unterschiedlicher Sensoren aufweist. Dies sind einige Beispiele für Sensoren, die für eine Sicherheitsanwendung relevante Sensordaten liefern können. Die konkrete Auswahl des Sensors oder der Sensoren hängt von der jeweiligen Sicherheitsanwendung ab. Die Sensoren können bereits selbst als Sicherheitssensoren ausgebildet sein.

Es ist aber erfindungsgemäß ausdrücklich alternativ vorgesehen, die Sicherheit erst nachgelagert durch Tests, zusätzliche Sensorik beziehungsweise (diversitäre) Redundanz oder Mehrkanaligkeit und dergleichen zu erzielen sowie sichere und nicht sichere Sensoren gleicher oder unterschiedlicher Sensorprinzipien miteinander zu kombinieren. Beispielsweise würde ein ausgefallener Sensor keine Sensordaten liefern, dies würde sich in den Zustands- und Ausführungsnachrichten der für den Sensor zuständigen Sicherheitsfunktionseinheit niederschlagen und damit von der Diagnoseeinheit in der Zustands- und Ausführungsüberwachung bemerkt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Aufgabe der Erfindung wird ferner gelöst durch ein Sicherheitsverfahren zur Überwachung mindestens einer Maschine, bei dem mindestens einen Sensor Sensordaten zu der Maschine erzeugt und eine mindestens mittelbar mit dem Sensor und der Maschine verbundene Verarbeitungseinheit für die Sensordaten als Ausführungsumgebung mindestens eine Logikeinheit auf einem Rechenknoten ablaufen lässt, wobei mindestens eine Logikeinheit mindestens eine Sicherheitsfunktionseinheit die Sensordaten sicherheitsgerichtet auswertet, um im Falle eines sicherheitsrelevanten Ereignisses ein Sicherheitssignal an die Maschine zum Auslösen einer Sicherheitsreaktion auszugeben, wobei basierend auf einer Sicherheitsaufgabe Logikeinheiten erzeugt, modifiziert, und/ oder aufgelöst werden; wobei eine Einhaltung von Sicherheitscodierungsrichtlinien sichergestellt wird, und/ oder sicherheitsrelevante Informationen ermittelt werden, und/ oder Schnittstellen für jede Sicherheitsfunktionseinheit bereitgestellt werden; wobei Überwachungsvorrichtungen dynamisch erzeugt, hinzuzugefügt, oder entfernt werden; und wobei Ressourcen für sicherheitsrelevante Aufgaben validiert werden.

Ferner kann ein computerlesbares Speichermedium bereitgestellt werden, das Befehle umfasst, die bei der Ausführung durch einen Computer diesen veranlassen, das hierin beschriebene Sicherheitsverfahren auszuführen.

Eine Anordnung aufweisend die Sicherheitsvorrichtung und die Maschine kann ebenfalls bereitgestellt werden.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: eine Übersichtsdarstellung einer Sicherheitsvorrichtung;
- Fig. 2: eine schematische Darstellung einer Ausführungsumgebung der Sicherheitsvorrichtung;
- Fig. 3: eine schematische Darstellung einer Ausführungsumgebung in einer Ausführungsform mit einem Rechenknoten;
- Fig. 4: eine schematische Darstellung einer Ausführungsumgebung ähnlich Figur 3 nun mit zwei Rechenknoten zur Schaffung von Redundanz und Diversität;
- Fig. 5: eine schematische Darstellung einer Ausführungsumgebung ähnlich Figur 3 mit einer zusätzlichen Automatisierungseinheit;
- Fig. 6: eine schematische Darstellung einer Ausführungsumgebung ähnlich Figur 3 in einer speziellen Ausführungsform unter Verwendung von Kubernetes;
- Fig. 7: eine Illustration von sicherem Kubernetes gemäß einer Ausführungsform.
- Fig. 8: eine Illustration von sicherem Kubernetes gemäß einer Ausführungsform;
- Fig. 9: eine Illustration einer Software-Architektur gemäß einer Ausführungsform.
- Fig. 10: eine Illustration des Zusammenspiels zwischen primärer Anwendung und Sidecar gemäß einer Ausführungsform; und
- Fig. 11: eine Illustration einer Hardware- und Software-Architektur gemäß einer Ausführungsform.

Nachfolgend werden die erfindungsgemäßen Sicherheitsvorrichtungen und Sicherheitsverfahren exemplarisch anhand von Ausführungsbeispielen erläutert.

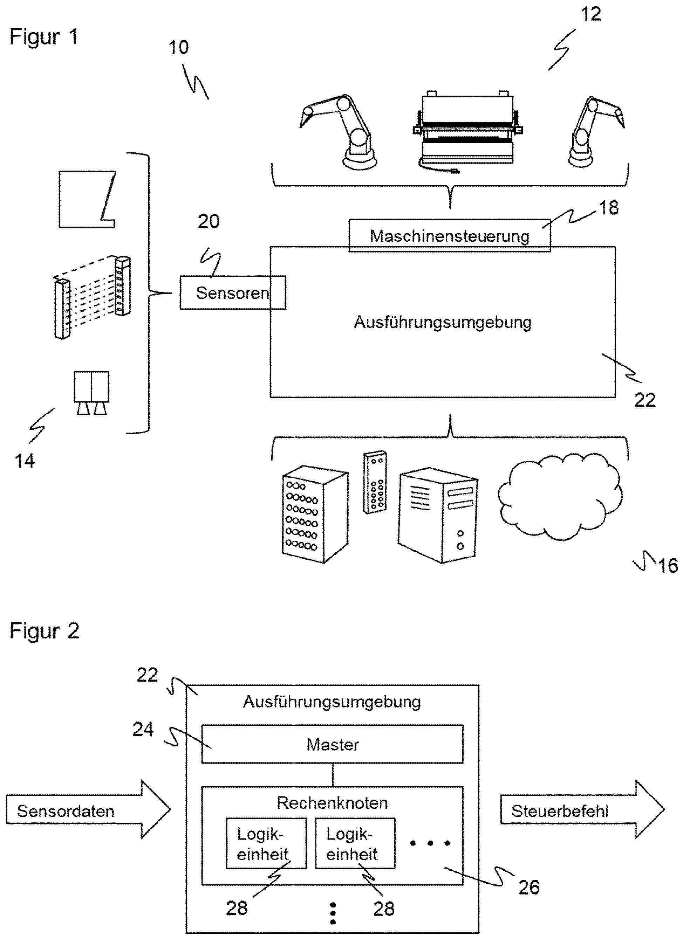

Figur 1 zeigt eine Übersichtsdarstellung einer Sicherheitsvorrichtung 10. Die Begriffe Sicherheit sowie sicher und nicht sicher sind weiterhin so zu verstehen, dass entsprechende Komponenten, Übertragungswege und Auswertungen die einleitend genannten Kriterien von Sicherheitsnormen erfüllen beziehungsweise nicht erfüllen.

Die Sicherheitsvorrichtung 10 lässt sich grob in drei Blöcke mit mindestens einer zu überwachenden Maschine 12, mindestens einem Sensor 14 zur Erzeugung von Sensordaten der überwachten Maschine 12 und mindestens einer Hardwarekomponente 16 mit Rechen- und Speicherressourcen für die Steuer- und Auswertungsfunktionalität zur Auswertung der Sensordaten und Auslösen einer etwaigen sicherheitsgerichteten Reaktion der Maschine 12 unterteilen. Maschine 12, Sensor 14 und Hardwarekomponente 16 werden im Folgenden manchmal im Singular und manchmal Plural angesprochen, was ausdrücklich die jeweils anderen Ausführungsformen mit nur einer jeweiligen Einheit 12, 14, 16 oder mehreren solchen Einheiten 12, 14, 16 einschließen soll.

An den Rändern sind jeweils Beispiele für die drei Blöcke dargestellt. Bei der vorzugsweise industriell eingesetzten Maschine 12 handelt es sich beispielsweise um eine Bearbeitungsmaschine, eine Fertigungsstraße, eine Sortieranlage, eine Prozessanlage, einen Roboter oder ein Fahrzeug, das schienengebunden sein kann oder nicht und insbesondere führerlos ist (AGC, Automated Guided Cart, AGV, Automated Guided Vehicle, AMR, Autonomous Mobile Robot).

Als beispielhafte Sensoren 14 sind ein Laserscanner, ein Lichtgitter und eine Stereokamera als Vertreter optoelektronischer Sensoren dargestellt, zu denen weitere Sensoren wie Lichttaster, Lichtschranken, FMVW-LIDAR oder Kameras mit jeglicher 2D- oder 3D-Erfassung zählen, wie Projektions- oder Lichtlaufzeitverfahren. Einige weiterhin nicht abschließende Beispiele für Sensoren 14 sind UWB-Sensoren, Ultraschallsensoren, Trägheitssensoren, kapazitive, magnetische oder induktive Sensoren, oder Prozessgrößensensoren, wie Temperatur-, Durchfluss-, Füllstand- oder Drucksensor. Diese Sensoren 14 können je nach Sicherheitsvorrichtung 10 in beliebiger Anzahl vorhanden sein und beliebig miteinander kombiniert werden.

Denkbare Hardwarekomponenten 16 sind Steuerungen (PLC, Programmable Logic Controller beziehungsweise SPS, speicherprogrammierbare Steuerung), ein Rechner in einem lokalen Netzwerk, insbesondere ein Edge-Device oder auch eine Cloud, und ganz allgemein jegliche Hardware, die Ressourcen für digitale Datenverarbeitung bereitstellt.

Im Inneren der Figur 1 sind die drei Blöcke nochmals aufgegriffen. Die Maschine 12 ist vorzugsweise über ihre Maschinensteuerung 18 mit der Sicherheitsvorrichtung 10 verbunden, wobei die Maschinensteuerung im Falle eines Roboters eine Robotersteuerung ist, im Falle eines Fahrzeugs eine Fahrzeugsteuerung, in einer Prozessanlage eine Prozesssteuerung und ähnlich für andere Maschinen 12. Die im Inneren als Block 20 zusammengefassten Sensoren 14 erzeugen nicht nur Sensordaten, sondern weisen auch eine nicht einzeln gezeigte Schnittstelle auf, um die Sensordaten in roher oder (vor)verarbeiteter Form auszugeben, sowie in aller Regel eine eigene Steuer- und Auswertungseinheit, also eine eigene Hardwarekomponente zur digitalen Datenverarbeitung.

Eine Ausführungsumgebung 22 ist ein zusammenfassender Begriff für eine Verarbeitungseinheit, welche unter anderem die Datenverarbeitung der Sensordaten leistet, um daraus Steuerbefehle an die Maschine 12 oder sonstige sicherheitsrelevante und weitere Informationen zu gewinnen. Die Ausführungsumgebung 22 ist auf den Hardwarekomponenten 16 implementiert und wird nachfolgend unter Bezugnahme auf die Figuren 2 bis 6 näher erläutert. Erfindungsgemäß ist nicht festgelegt, auf welcher Hardware die Ausführungsumgebung 22 ausgeführt wird. Die obige Auflistung möglicher Hardwarekomponenten nennt einige Beispiele, die beliebig kombinierbar sind. Ferner ist die Ausführungsumgebung 22 absichtlich mit Überlapp zu der Maschinensteuerung 18 und dem Block 20 der Sensoren 14 eingezeichnet, da auch interne Rechen- und Speicherressourcen der Sensoren 14 und/oder der Maschine 12 von der Ausführungsumgebung 22 genutzt werden können, wiederum in beliebiger Kombination einschließlich der Möglichkeit, dass es gar keine zusätzlichen Hardwarekomponenten 16 außerhalb der Maschine 12 und der Sensoren 14 gibt. Im Folgenden wird davon ausgegangen, dass die Hardwarekomponenten 16 die Rechen- und Speicherressourcen stellen, damit ist dann eine Einbeziehung interner Hardware von Maschine 12 und/oder Sensoren 14 mit gemeint.

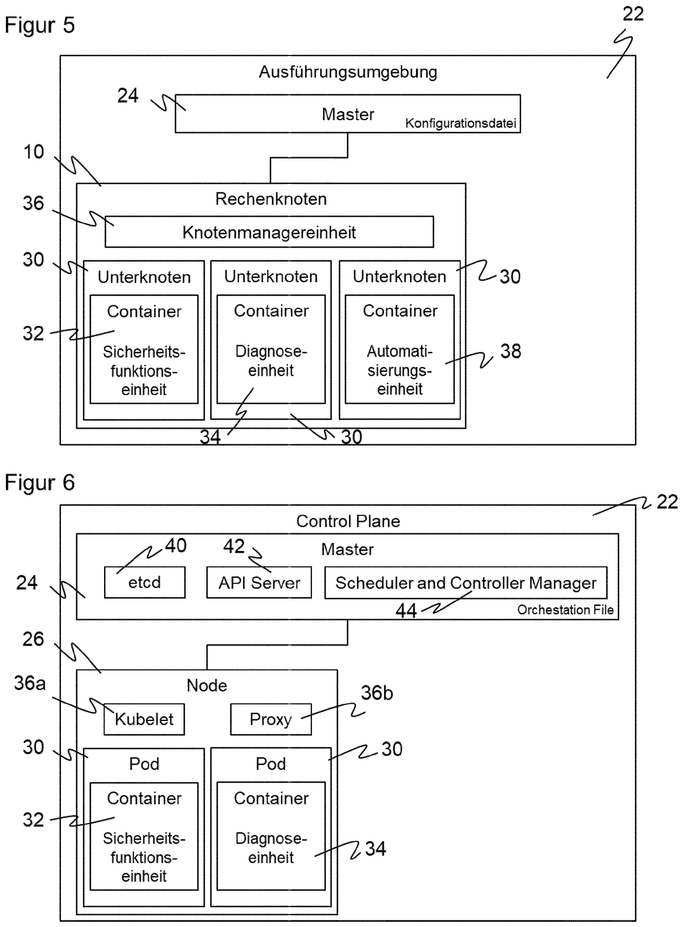

Die Sicherheitsvorrichtung 10 und insbesondere die Ausführungsumgebung 22 stellt nun Sicherheitsfunktionen und vorzugsweise auch Diagnosefunktionen bereit. Später unter Bezugnahme auf Figur 5 werden in Abgrenzung von Sicherheitsfunktionen, die auch als sichere Automatisierungsfunktionen bezeichnet werden, als weitere Option zusätzliche nicht sichere Automatisierungsfunktionen eingeführt. Eine solche Sicherheitsfunktion nimmt den Strom zeitlich aufeinanderfolgender Mess- und Ereignisinformationen mit den Sensordaten entgegen und erzeugt entsprechende Steuerungssignale und vorzugsweise auch Diagnose- oder Übersichtsinformationen.

Die Sicherheitsvorrichtung 10 erreicht eine hohe Verfügbarkeit und Robustheit gegenüber unvorhergesehenen internen wie externen Ereignissen, indem Sicherheitsfunktionen als Dienstleistung der Hardwarekomponenten 16 erbracht wird. Die flexible Zusammensetzung der Hardwarekomponenten 16 und vorzugsweise deren Vernetzung im lokalen oder nicht lokalen Netzwerk beziehungsweise in eine Cloud ermöglichen eine Redundanz und Leistungs-Elastizität, so dass sehr robust mit Unterbrechungen, Störungen und Anforderungsspitzen umgegangen werden kann. Die Sicherheitsvorrichtung 10 erkennt, sobald Fehler nicht mehr aufgefangen werden und damit sicherheitsrelevant werden, und leitet dann eine situationsgerechte Reaktion ein, mit der die Maschine 12 erforderlichenfalls in einen sicheren Zustand überführt wird. Dazu wird die Maschine 12 beispielsweise angehalten, verlangsamt, sie weicht aus oder arbeitet in einem ungefährlichen Modus. Es sei nochmals klargestellt, dass es zwei Klassen von Ereignissen gibt, die eine sicherheitsgerichtete Reaktion auslösen: zum einen ein als gefährlich eingestuftes Ereignis, das sich aus den Sensordaten ergibt, und zum anderen das Aufdecken eines sicherheitsrelevanten Fehlers.

Figur 2 zeigt eine schematische Darstellung der Ausführungsumgebung 22. Aufgabe der Ausführungsumgebung 22 ist letztlich, aus Sensordaten einen Steuerbefehl abzuleiten, insbesondere ein Sicherheitssignal, das eine sicherheitsgerichtete Reaktion der Maschine 12 auslöst. Die Ausführungsumgebung 22 weist einen Master 24 und mindestens einen Rechenknoten 26 auf. Die erforderliche Rechen- und Speicherkapazität für Master 24 und Rechenknoten 26 stellen die Hardwarekomponenten 16 bereit, die Ausführungsumgebung 22 kann sich transparent über eine Vielzahl von Hardwarekomponenten 16 erstrecken. Ein Rechenknoten 26 ist dabei abstrakt oder virtuell zu verstehen, es gibt nicht notwendig eine 1:1-Beziehung zwischen einem Rechenknoten 26 und einer Hardwarekomponente 16, sondern eine Hardwarekomponente 16 kann mehrere Rechenknoten 26 bereitstellen oder umgekehrt ein Rechenknoten 26 auf mehrere Hardwarekomponenten 16 verteilt sein. Diese Verteilung gilt analog für den Master 24.

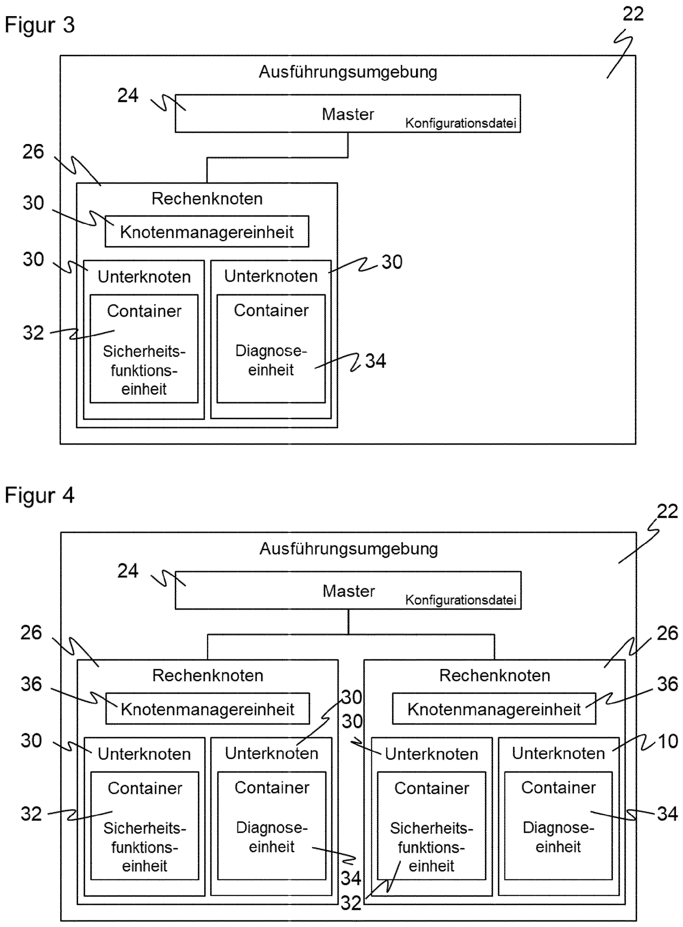

Ein Rechenknoten 26 weist eine oder mehrere Logikeinheiten 28 auf. Eine Logikeinheit 28 ist eine in sich abgeschlossene funktionale Einheit, die Informationen entgegennimmt, diese zusammenführt, transformiert, umgestaltet oder allgemein zu einer neuen Information verarbeitet und dann zur Visualisierung, als Steuerbefehl oder zur weiteren Verarbeitung möglichen Abnehmern zur Verfügung stellt, insbesondere weiteren Logikeinheiten 28 oder einer Maschinensteuerung 12. Im Rahmen dieser Beschreibung sind vornehmlich drei Arten von Logikeinheiten 28 zu unterscheiden, nämlich die unter Bezugnahme auf die Figur 3 eingeführten Sicherheitsfunktionseinheiten und Diagnoseeinheiten sowie die unter Bezugnahme auf die Figur 5 eingeführten Automatisierungseinheiten.

Die Ausführungsumgebung 22 aktiviert die jeweils benötigten Logikeinheiten 28 und sorgt für deren geordneten Betrieb. Hierzu weist sie den jeweiligen Logikeinheiten 28 die benötigten Ressourcen auf den zur Verfügung stehenden Rechenknoten 26 beziehungsweise Hardwarekomponenten 26 zu und überwacht die Aktivität sowie den Ressourcenbedarf aller Logikeinheiten 28. Vorzugsweise erkennt die Ausführungsumgebung 22, wenn eine Logikeinheit 28 nicht mehr aktiv ist oder es zu Unterbrechungen der Ausführungsumgebung 22 oder der Logikeinheit 28 kam. Sie versucht dann, die Logikeinheit 28 zu reaktivieren und erzeugt eine neue Kopie der Logikeinheit 28, wenn das nicht möglich ist, um so den geordneten Betrieb zu wahren.

Unterbrechungen können vorhergesehen wie unvorhergesehen sein. Beispielhafte Ursachen sind Fehler in der Infrastruktur, also den Hardwarekomponenten 16, deren Betriebssystem oder den Netzwerkverbindungen, weiterhin versehentliche Fehlbedienungen oder Manipulationen oder der vollständige Verbrauch der Ressourcen einer Hardwarekomponente 16. Kann eine Logikeinheit 28 alle erforderlichen, insbesondere sicherheitsrelevanten Informationen nicht oder jedenfalls nicht schnell genug verarbeiten, so kann die Ausführungsumgebung 22 zusätzliche Kopien der betroffenen Logikeinheit 28 erstellen, um so die Verarbeitung der Informationen weiter zu gewährleisten. Auf diese Weise sorgt die Ausführungsumgebung 22 dafür, dass die Logikeinheit 28 ihre Funktion mit einer erwarteten Qualität und Verfügbarkeit erbringt.

Figur 3 zeigt nochmals eine weitere, vorteilhaft ausdifferenzierte Ausführungsform der Ausführungsumgebung 22 der Sicherheitsvorrichtung 10. Der Master 24 bildet die Verwaltungs- und Kommunikationszentrale. Darin ist eine Konfigurationsinformation beziehungsweise Konfigurationsdatei über die vorhandenen Logikeinheiten 28 gespeichert, so dass der Master 24 die erforderlichen Kenntnisse über die Konfiguration hat, insbesondere welche Logikeinheiten 28 es gibt und geben soll, auf welchen Rechenknoten 26 sie zu finden sind und in welchem Zeitablauf sie Ressourcen erhalten und aufgerufen werden. Die Konfigurationsdatei ist bevorzugt über Signaturen gegen absichtliche und unabsichtliche Manipulationen abgesichert, beispielsweise über Blockchaintechnologien. Hier trifft sich die Sicherheitstechnik (Safety) vorteilhaft mit der Datenintegrität ((Cyber-)Security), denn auf diese Weise werden Angriffe abgewehrt oder jedenfalls erkannt, die unabsehbare Unfallfolgen nach sich ziehen könnten.

Die Rechenknoten 26 weisen vorteilhafterweise eine eigene Unterstruktur auf, wobei die nun beschriebenen Einheiten auch nur teilweise vorhanden sein können. Zunächst können Rechenknoten 26 nochmals in Unterknoten 30 unterteilt sein. Logikeinheiten 28 werden vorzugsweise erst innerhalb der Unterknoten 30 erzeugt, nicht bereits auf Ebene von Rechenknoten 26. bevorzugt sind Logikeinheiten 28 innerhalb von Containern virtualisiert, also containerisiert. Jeder Unterknoten 30 weist also einen oder mehrere Container mit vorzugsweise jeweils einer Logikeinheit 28 auf. Im Beispiel der Figur 3 gibt es zwei Logikeinheiten 28, nämlich eine Sicherheitsfunktionseinheit 32 und eine Diagnoseeinheit 34, jeweils in einem eigenen Container und auch Unterknoten 30. Abweichend wäre ebenso vorstellbar, die Sicherheitsfunktionseinheit 32 und Diagnoseeinheit 34 demselben Unterknoten 30 zuzuweisen.

Eine Knotenmanagereinheit 36 des Rechenknotens 26 koordiniert dessen Unterknoten 30 und die diesem Rechenknoten 26 zugewiesenen Logikeinheiten 28. Die Knotenmanagereinheit 36 kommuniziert ferner mit dem Master 24 sowie weiteren Rechenknoten 26. Die Verwaltungsaufgaben der Ausführungsumgebung 22 können praktisch beliebig auf den Master 24 und die Knotenmanagereinheit 36 verteilt werden, der Master also als verteilt implementiert angesehen werden. Vorteilhaft ist aber, wenn sich der Master um die globalen Aufgaben der Ausführungsumgebung 22 und jede Knotenmanagereinheit 36 um die lokalen Aufgaben des jeweiligen Rechenknotens 26 kümmert. Trotzdem kann der Master 24 vorzugsweise auf mehrere Hardwarekomponenten 16 verteilt oder redundant ausgebildet sein, um dessen Ausfallsicherheit zu erhöhen.

Eine Absicherungseinheit oder Sicherheitsfunktionseinheit 32 (welche auch als "Safety functional unit" bezeichnet werden kann) ist ein Beispiel für eine spezielle Logikeinheit 28 zur Auswertung von Sensordaten für eine Absicherungsaufgabe mit funktionaler Sicherheit. Typische Beispiele sind Abstandsüberwachungen (speziell Speed-and-Separation), Durchgangsüberwachung,

Schutzfeldüberwachung oder Kollisionsvermeidung mit dem Ziel einer angemessenen sicherheitsgerichteten Reaktion der Maschine 12 im Gefahrenfall. Dies ist die Kernaufgabe der Sicherheitstechnik, wobei je nach Sensor 14 und Auswertungsverfahren verschiedenste Wege denkbar sind, zwischen einer normalen und einer gefährlichen Situation zu unterscheiden. Für jede Sicherheitsanwendung oder Gruppe von Sicherheitsanwendungen können passende Sicherheitsfunktionseinheiten 32 programmiert oder aus einem Pool vorhandener Sicherheitsfunktionseinheiten 32 ausgewählt werden.

Eine Diagnoseeinheit 34 (welche auch als "diagnostic unit" bezeichnet werden kann) ist ein weiteres Beispiel für eine spezielle Logikeinheit 28 und ebenfalls sicherheitsrelevant. Die Diagnoseeinheit 34 kann eine oder mehrere Sicherheitsfunktionseinheiten überwachen, indem sie Diagnosemaßnahmen wie PSM (process safety management, Prozesssicherheitsmanagement) oder Zustandsüberwachung durchführt. Die Diagnoseeinheit 34 kann einfach sein, etwa als Watchdog, oder Tests und Diagnosen unterschiedlicher Komplexität durchführen. Als Logikeinheit 28 läuft sie in derselben Ausführungsumgebung 22 und wird nach deren gleichen Grundprinzipien betrieben, ebenso wie eine Sicherheitsfunktionseinheit 32. Sie ist in der Lage, sichere Algorithmen und Selbstüberwachungsmaßnahmen einer Sicherheitsfunktionseinheit 32 jedenfalls teilweise zu ersetzen oder zu ergänzen. Dazu überwacht die Diagnoseeinheit 34 analysiert jedoch die Aktivitäten der Sicherheitsfunktionseinheit 32 auf ihre Korrektheit, d.h. ob diese Sicherheitsfunktionseinheit 32 die ihr zugedachten Aktivitäten in der festgelegten Reihenfolge und in den zeitlichen Rahmenbedingungen ausführt. Die Ausführungsumgebung 22 prüft also lediglich, ob eine Sicherheitsfunktionseinheit 32 überhaupt noch aktiv ist, die Diagnoseeinheit 34 dagegen spezifisch, ob Reihenfolgen, Zeitfenster, Zeitpunkte und Inhalte der Aktivitäten korrekt sind, und deckt damit Fehler der Sicherheitsfunktionseinheit 32 auf. Dafür hat die Diagnoseeinheit 34 Erwartungen an die Ausgabe der Sicherheitsfunktionseinheit 32 zu bestimmten Zeiten, sei es in deren regulärem Betrieb oder in Antwort auf bestimmte als Test eingespeiste künstliche Sensorinformationen.

Durch den Einsatz der Ausführungsumgebung 22 wird es möglich, sicherheitsrelevante Logikeinheiten 28 praktisch beliebig auf eine auch stark heterogene Umgebung der Hardwarekomponenten 26 einschließlich eines Edge-Netzwerks oder einer Cloud zu verteilen. Die Ausführungsumgebung 22 ruft die erforderlichen Logikeinheiten 28 ins Leben, beendet sie oder verschiebt sie zwischen Rechenknoten 26 und Unterknoten 30.

Figur 4 zeigt eine weitere Ausführungsform der Ausführungsumgebung 22 der Sicherheitsvorrichtung 10. In Ergänzung zu der Ausführungsform nach Figur 3 sind hier Kopien von Sicherheitsfunktionseinheit 32 und Diagnoseeinheit 34 erzeugt. Dafür ist in diesem Beispiel auch ein weiterer Rechenknoten 26 vorhanden, das wäre aber nicht zwingend, da weitere Logikeinheiten auch im selben Rechenknoten 26 oder sogar Unterknoten 30 angelegt werden könnten. Die zusätzlichen Logikeinheiten 28 sind nicht für zusätzliche Funktionalität vorgesehen, obwohl das auch vorstellbar wäre, sondern um Redundanzen zu erzeugen. Dabei kann eine Diagnoseeinheit 34 jeweils einer Sicherheitsfunktionseinheit 32 desselben oder eines anderen Rechenknotens 26 ebenso wie desselben oder eines anderen Unterknoten 30 zugeordnet sein. Außerdem kann eine Diagnoseeinheit 34 eine Sicherheitsfunktionseinheit 32 alternativ eins zu eins überwachen, oder eine Diagnoseeinheit 34 ist für mehrere Sicherheitsfunktionseinheiten 32 zuständig oder umgekehrt sind mehrere Diagnoseeinheiten 34 für dieselbe Sicherheitsfunktionseinheit 32 zuständig. Mehrere Diagnoseeinheiten 34 können zudem bevorzugt ihre Diagnosen untereinander vergleichen.

Damit ermöglicht die Erfindung über eine Anpassung an eine heterogene Umgebung mit nahezu beliebigen Hardwarekomponenten 16 hinaus auch eine Skalierung des Sicherheitsniveaus (Safety Level, etwa Performance Class PC nach IEC/TS 62998, Performance Level nach ISO 13849 oder Safety Integrity Level SIL nach IEC 61508). Dafür gibt es drei Stellschrauben: Die Häufigkeit der Diagnose, also die Testzyklen, mit denen eine Diagnoseeinheit 34 eine Sicherheitsfunktionseinheit 32 überwacht, die Vielfachheit der Redundanz, also wie viele Kopien einer Sicherheitsfunktionseinheit 32 und/oder Diagnoseeinheit 34 aktiv sind, und die Diversität, also auf wie viele Rechenknoten 26 oder Unterknoten 30 die Sicherheitsfunktionseinheiten 32 und Diagnoseeinheiten 34 verteilt sind.

Damit ließe sich beispielhaft die nachfolgende Abstufung des Sicherheitsniveaus erzielen: Niedriges Sicherheitsniveau: eine Sicherheitsfunktionseinheit 32 und eine Diagnoseeinheit 34 sind jeweils nur einmal instantiiert und laufen auf derselben Hardwarekomponente 16, insbesondere einem einzelnen Rechner, und die Diagnoseeinheit 34 prüft die Verarbeitungsergebnisse der Sicherheitsfunktionseinheit 32 nur in jedem n-ten Sensorzyklus, mit dem die Sensoren 14 Sensordaten bereitstellen beziehungsweise diese verarbeitet werden. Die Ausführungsumgebung 22 führt dazu insbesondere n-mal die Sicherheitsfunktionseinheit 32 und erst dann einmal die Diagnoseeinheit 34 aus. Dieses Vorgehen ähnelt einem sogenannten Test vor Anforderung.

Mittleres Sicherheitsniveau: weiterhin gibt es nur je eine Kopie der Sicherheitsfunktionseinheit 32 und Diagnoseeinheit 34. Allerdings ist die Häufigkeit der Diagnose erhöht, bis hin zu einer Überprüfung jedes Sensorzyklus', wo dann die Ausführungsumgebung die Diagnoseeinheit 34 jedes Mal nach der Sicherheitsfunktionseinheit 32 aufruft.

Hohes Sicherheitsniveau: Nun werden von der Ausführungsumgebung 22 jeweils zwei Instanzen der Sicherheitsfunktionseinheit 32 und der Diagnoseeinheit 34 erzeugt, die verschiedenen Unterknoten 30 oder besser noch Rechenknoten 26 und vorzugsweise damit auch Hardwarebausteinen 16 zugewiesen sind. Dies ergibt eine zweifache Redundanz und damit ein zweikanaliges System und zugleich eine mögliche Diversität. Die Diagnoseeinheiten 34 haben kurze Testzyklen, vorzugsweise denselben Zyklus wie die Sicherheitsfunktionseinheiten 32. Es ist denkbar, eine Kreuztestung vorzunehmen oder immer wieder einzustreuen, bei der eine Diagnoseeinheit 34 eine andere Kopie der Sicherheitsfunktionseinheit 32 überwacht, oder die Diagnosen der Diagnoseeinheiten 34 untereinander zu vergleichen.

Sehr hohes Sicherheitsniveau: Nun werden sogar mehr als zwei Kopien der Sicherheitsfunktionseinheit 32 und/oder der Diagnoseeinheit 34 erzeugt. Damit entsteht je nach konkreter Ausgestaltung ein mindestens dreikanaliges System oder allgemein eine k-fache Redundanz oder diversitäre Redundanz. Ansonsten gelten die Ausführungen zum hohen Sicherheitsniveau auch hier.

Die entsprechenden Anforderungen werden in der Konfigurationsdatei mitgeteilt beziehungsweise dort festgehalten. Dies kann gezielt von außen geschehen, um von Hand oder auf gesonderte Anforderung ein bestimmtes Sicherheitsniveau einzustellen. Besonders vorteilhaft ist eine situative Anpassung des Sicherheitsniveaus. Dabei stellt die Sicherheitsvorrichtung 10 fest, insbesondere mittels einer geeigneten Sicherheitsfunktionseinheit 32, wie die aktuelle Gefahrenlage anhand der Sensordaten und gegebenenfalls weiterer Informationen, insbesondere von der Maschinensteuerung 18 beispielsweise über einen bevorstehenden Arbeitsschritt, zu beurteilen ist. Diese situative oder kontextbezogene Risikoeinschätzung wird als "Behaviour Driven Risk Assessment" bezeichnet. Es kann besondere Ereignisse geben, die Einfluss auf ein angemessenes Sicherheitsniveau haben, wie die spezielle Anforderung einer Sicherheitsfunktion, das Abschließen eines Auftrags oder eine Wartungsanforderung. Über die geschilderten Anpassungen kann dann jeweils die Ausführungsumgebung das neue Sicherheitsniveau sogar dynamisch einstellen und erforderlichenfalls Logikeinheiten 28 ins Leben rufen, beenden oder zwischen Rechenknoten 26 oder Unterknoten 30 verschieben. Auch eine Optimierung anhand von Randbedingungen, wie einer erhöhten Prozess- oder Fertigungseffizienz ist vorstellbar.

Letzteres gilt insbesondere, wenn die Ausführungsumgebung nicht allein für die Sicherheit zuständig ist, sondern die Sensoren 14 auch für nicht sicherheitsrelevante Automatisierungsaufgaben nutzt. Eine entsprechende Ausführungsform der Ausführungsumgebung 22 zeigt die Figur 5 . Dort kommt eine weitere Logikeinheit 28 hinzu, nämlich eine Automatisierungseinheit 38. Dabei sind einzelne oder mehrere Automatisierungseinheiten 38 mit beliebigen insbesondere zu den Figuren 3 und 4 erläuterten Ausführungsformen kombinierbar, die Figur 5 zeigt nur ein einfaches Beispiel mit jeweils einem Rechenknoten 26, einer Sicherheitsfunktionseinheit 32, einer Diagnoseeinheit 34 und einer Automatisierungseinheit 38.

Eine Automatisierungseinheit 38 ist eine Logikeinheit 28, die Sensoren 14 und Maschinen 12 oder Teile davon überwacht, allgemein Aktoren, und die basierend auf diesen Informationen (Teil-)Abläufe steuert oder Informationen darüber bereitstellt. Eine Automatisierungseinheit 38 wird von der Ausführungsumgebung im Prinzip behandelt wie jede Logikeinheit 28, und damit ist sie vorzugsweise ebenfalls containerisiert. Beispiele für Automatisierungsaufgaben sind Qualitätsprüfung, Variantensteuerung, Objekterkennung zum Greifen, Sortieren oder für sonstige Bearbeitungsschritte, Klassifikationen und dergleichen. Die Abgrenzung zu den sicherheitsrelevanten Logikeinheiten 28 besteht darin, dass eine Automatisierungseinheit 38 nicht zum Unfallschutz, d.h. der sicherheitstechnischen Anwendung beiträgt. Dementsprechend bedarf sie auch keiner Diagnoseeinheit 34. Ein verlässliches Arbeiten und eine gewisse Überwachung durch die Ausführungsumgebung 22 ist dennoch erwünscht, aber dies dient einer Erhöhung der Verfügbarkeit und damit der Produktivität und Qualität, nicht der Sicherheit.

Die Architektur der Ausführungsumgebung 22 erlaubt ein nahtloses Verschmelzen von Sicherheit und Automatisierung, da sicherheitsrelevante Logikeinheiten 32, 34 und Automatisierungseinheiten 38 in derselben Umgebung und praktisch simultan ausgeführt sowie gleichartig behandelt werden können. Im Falle eines Konflikts gibt die Ausführungsumgebung 22 vorzugsweise den sicherheitsrelevanten Logikeinheiten 32, 34 Priorität, etwa im Falle knapper Ressourcen. In der Konfigurationsdatei können Ausführungsregeln für die Koexistenz von sicherheitsrelevanten Logikeinheiten 32, 34 und Automatisierungseinheiten 38 berücksichtigt werden.

Figur 6 zeigt eine schematische Darstellung einer Ausführungsumgebung 22 in einer Ausführungsform unter Verwendung von Kubernetes. Die Ausführungsumgebung 22 wird hier control plane genannt. Die Figur 6 ist an die Figur 3 angelehnt, die weiteren unter Bezugnahme auf die Figuren 3 bis 5 erläuterten Ausführungsformen lassen sich analog in Kubernetes umsetzen. In Kubernetes besitzt der Master 24 eine Unterstruktur. Der (Kubernetes-)Master 24 ist nach wie vor nicht selbst für die Ausführung von Containern oder Logikeinheiten 28 zuständig, sondern kümmert sich um die allgemeinen Abläufe oder die Orchestrierung (orchestration layer). Dementsprechend wird die Konfigurationsdatei als orchestration file bezeichnet. Weiterhin sind eine Datenbank etcd 40 für alle relevanten Daten der Kubernetes-Umgebung, ein API-Server 42 als Schnittstelle zu Kubernetes sowie ein Scheduler and Controller Manager 44 vorhanden, der die eigentliche Orchestrierung vornimmt.

Die vorhandene Hardware wird in Nodes als Rechenknoten 26 unterteilt. In den Nodes wiederum gibt es einen oder mehrere sogenannte Pods als Unterknoten 30 und darin die Container mit den eigentlichen Micro-Services, in diesem Fall den Logikeinheiten 28 samt zugehöriger Containerlaufzeit (container runtime) und damit allen Bibliotheken und für die Logikeinheit 28 zur Laufzeit erforderlichen Abhängigkeiten. Das lokale Management leistet eine nun zweigeteilte Knotenmanagereinheit 36 mit einem sogenannten Kubelet 36a und einem Proxy 36b. Das Kubelet 36a ist ein Agent, der die eigenen Pods und Container des Nodes verwaltet. Der Proxy 36b wiederum enthält die Netzwerkregeln für die Kommunikation zwischen Nodes und mit dem Master.

Kubernetes ist eine bevorzugte, aber keineswegs die einzige Umsetzungsmöglichkeit für die Ausführungsumgebung 22. Als eine weitere Alternative unter mehreren wäre Docker Swarm zu nennen. Docker selbst ist keine direkte Alternative, sondern ein Werkzeug zum Erzeugen von Containern und somit sowohl mit Kubernetes als auch Docker Swarm kombinierbar, die dann die Container orchestrieren.

Verschiedene Ausführungsformen stellen eine dynamische Konfiguration (dynamic config) von sicherem Kubernetes bereit.

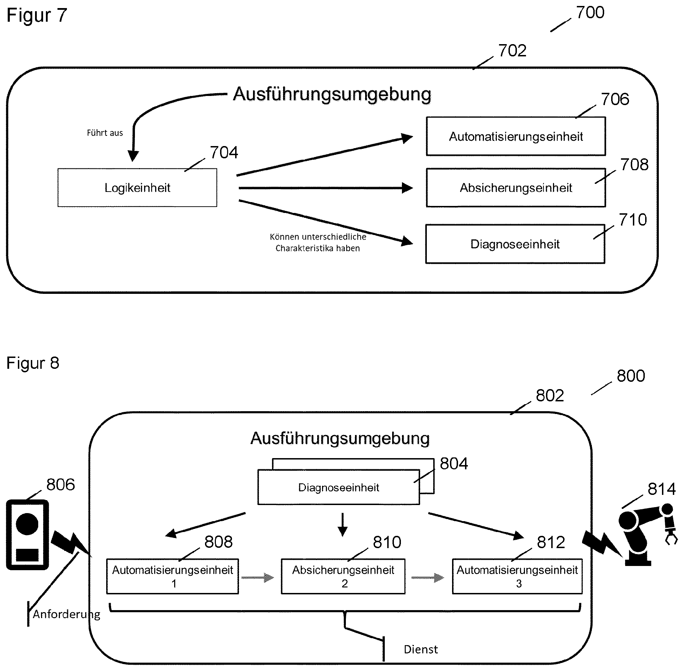

Figur 7 zeigt eine Illustration 700 von sicherem Kubernetes gemäß einer Ausführungsform. Eine Ausführungsumgebung 702 lässt eine Logikeinheit 704 ablaufen (in anderen Worten: führt eine Logikeinheit 704 aus). Die Logikeinheit 704 kann unterschiedliche Charakteristika haben (beispielsweise eine Automatisierungseinheit 706, eine Absicherungseinheit 708, oder eine Diagnoseeinheit 710).

Figur 8 zeigt eine Illustration 800 von sicherem Kubernetes gemäß einer Ausführungsform. In einer Ausführungsumgebung 802 wird eine Diagnoseeinheit 804 bereitgestellt. Die Diagnoseeinheit kann eine Automatisierungseinheit 808, eine Absicherungseinheit 810 und eine weitere Automatisierungseinheit 812 überwachen. Eine Anforderung kann von einer externen Quelle 806, beispielsweise einem Benutzer, an die Ausführungsumgebung übergeben werden. Die Automatisierungseinheit 808, die Absicherungseinheit 810 und die weitere Automatisierungseinheit 812 stellen einen Dienst bereit, beispielsweise zum Steuern eines externen Gerätes 814, beispielsweise eines Roboters.

Gemäß verschiedener Ausführungsformen werden Vorrichtungen und Verfahren bereitgestellt, um die Sicherheit zu einem integralen Bestandteil der Laufzeitumgebung zu machen, indem sie erweitert und ein Verfahren zur automatischen dynamischen Konfiguration von Sicherheitsanwendungen eingeführt wird.

Ein sogenannter Kubernetes-Operator ist eine Softwareerweiterung zu Kubernetes, die die Verwaltung und Automatisierung der Bereitstellung, Skalierung und Verwaltung komplexer zustandsbehafteter Anwendungen erleichtert. Ein Operator ist ein Codestück, das innerhalb oder außerhalb eines Kubernetes-Clusters ausgeführt werden kann und die Kubernetes-API erweitert, um Instanzen einer bestimmten Anwendung oder eines bestimmten Dienstes zu erstellen, zu konfigurieren und zu verwalten. Operatoren verwenden die Kubernetes-API, um auf Ereignisse zu achten, beispielsweise die Erstellung einer neuen Ressource, und handeln dann basierend auf diesen Ereignissen.

Operatoren können als Satz benutzerdefinierter Ressourcendefinitionen (custom resource definitions; CRDs) implementiert werden, die im Kubernetes-Cluster installiert werden. Diese CRDs definieren die benutzerdefinierten Ressourcen, die der Betreiber verwalten kann. Beispielsweise kann ein Datenbankbetreiber eine benutzerdefinierte Ressource für einen Datenbankcluster definieren, die Informationen über die Anzahl der Replikate, die Version der Datenbank und andere Konfigurationsoptionen enthält.

Der Operator selbst kann als Regelkreis implementiert sein, der innerhalb eines Pods im Kubernetes-Cluster läuft. Der Regelkreis kann Änderungen an den von ihm verwalteten benutzerdefinierten Ressourcen überwachen und die zugrunde liegenden Systeme entsprechend aktualisieren. Der Bediener kann außerdem den Status der verwalteten Ressourcen überwachen und bei Bedarf Korrekturmaßnahmen ergreifen. Wenn beispielsweise ein Pod, auf dem eine Datenbankinstanz ausgeführt wird, abstürzt, kann der Bediener den Pod möglicherweise automatisch ersetzen, um sicherzustellen, dass die gewünschte Anzahl von Replikaten beibehalten wird.

Operatoren bieten eine höhere Abstraktionsebene als herkömmliche Kubernetes-Manifeste. Anstatt einzelne Pods, Dienste und Konfigurationen zu verwalten, können Sie mit einem Operator eine gesamte Anwendung oder einen gesamten Dienst als einzelne Einheit verwalten. Dies kann die Automatisierung der Bereitstellung, Skalierung und Verwaltung komplexer Anwendungen erleichtern.

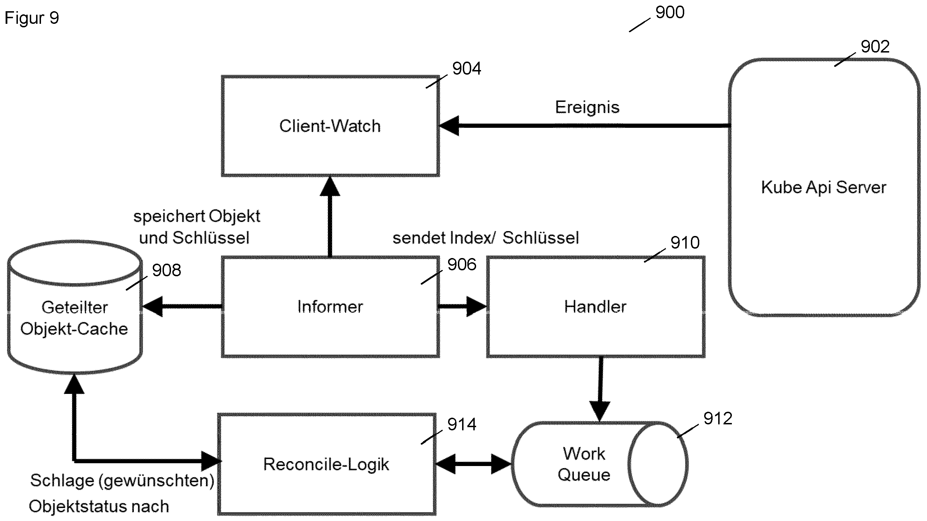

Figur 9 zeigt eine Illustration 900 einer Software-Architektur gemäß einer Ausführungsform mit Kube Api Server 902, Client-Watch 904, Informer 906, geteiltem Objekt-Cache 908, Handler 910, Work Queue 912 und Reconcile-Logik 914.

In Kubernetes ist die dynamische Zugangskontrolle eine Funktion, die es ermöglicht, Anfragen an den API-Server abzufangen und zu ändern, bevor sie dauerhaft gespeichert werden. Mit diesem Mechanismus können benutzerdefinierte Richtlinien durchgesetzt und dynamische Änderungen an den Ressourcenobjekten vorgenommen werden, die im Cluster erstellt, aktualisiert oder gelöscht werden. Zu diesem Zweck werden üblicherweise zwei Arten von Zulassungs-Webhooks verwendet: Validierungs-Zulassungs-Webhooks (validation admission webhooks) und mutierende Zulassungs-Webhooks (mutating admission webhooks). Durch die Nutzung der dynamischen Zulassungskontrolle mit Validierungs- Zulassungs-Webhooks und mutierenden Zulassungs-Webhooks können das Standardverhalten von Kubernetes erweitert und benutzerdefinierte Richtlinien und Änderungen an den in Ihrem Cluster verwalteten Ressourcen durchgesetzt werden.

Validierungszulassungs-Webhooks (validating admission webhooks; welche auch als "Logical unit for validation" bezeichnet werden können) werden verwendet, um Anforderungen an den API-Server zu validieren und möglicherweise abzulehnen. Wenn eine Anfrage vom API-Server empfangen wird, wird sie an die konfigurierten Validierungszulassungs-Webhooks gesendet, bevor die Ressource beibehalten wird. Diese Webhooks können eingehende Anfragen prüfen und anhand vordefinierter Richtlinien entscheiden, ob sie zugelassen oder abgelehnt werden. Wenn ein Validierungs-Webhook eine Anfrage ablehnt, gibt der API-Server eine Fehlerantwort an den Client zurück und die Anfrage wird nicht beibehalten.

Zu den häufigsten Anwendungsfällen für Validierungszulassungs-Webhooks gehören:
- Durchsetzung von Namenskonventionen: Es kann sichergestellt werden, dass Ressourcennamen bestimmten Mustern oder Konventionen folgen.
- Durchsetzung von Sicherheitsrichtlinien: Es kann überprüft werden, ob die Anfrage die erforderlichen Sicherheitsanmerkungen oder -bezeichnungen enthält.
- Durchsetzen von Ressourcengrenzen: Es können Ressourcenanforderungen und -grenzen, wie z. B. CPU und Arbeitsspeicher, validiert werden, um übermäßige Beanspruchung zu verhindern.

Mutierende Zulassungs-Webhooks (mutating admission webhooks; welche auch als "Logical unit for initialization" bezeichnet werden können) können eingehende Anforderungen ändern, bevor sie im Cluster gespeichert werden. Diese Webhooks empfangen die Anfrage, können das Ressourcenobjekt ändern und es dann an den API-Server zurückgeben. Die geänderte Ressource wird basierend auf der geänderten Version im Cluster gespeichert.

Zu den häufigsten Anwendungsfällen für mutierende Zulassungs-Webhooks gehören:
- Einfügen von Standardwerten: bestimmte Felder im Ressourcenobjekt können automatisch hinzugefügt oder auf bereitgestellte Standardwerte aktualisiert werden, wenn sie fehlen.
- Durchsetzen von Richtlinien: zusätzliche Beschriftungen, Anmerkungen oder andere Metadaten können dem Ressourcenobjekt basierend auf vordefinierten Richtlinien hinzugefügt werden.
- Datentransformation: die eingehende Anfrage kann so umgewandelt werden, dass sie bestimmte Anforderungen oder Standards erfüllt.

Es ist anzumerken, dass Zulassungs-Webhooks separat vom Kubernetes-API-Server konfiguriert und bereitgestellt werden müssen. Sie werden typischerweise als HTTP-Endpunkte implementiert, die Anfragen vom API-Server empfangen. Die Antwort vom Webhook bestimmt, ob die Anfrage zugelassen, geändert oder abgelehnt wird.

Anwendungen und Dienste erfordern häufig zugehörige Funktionen wie Überwachung, Protokollierung, Konfiguration und Netzwerkdienste. Diese Randaufgaben können als separate Komponenten oder Dienste implementiert werden. Dazu können Komponenten einer Anwendung in einem separaten Prozess oder Container bereitgestellt werden, um Isolierung und Kapselung zu gewährleisten. Dieses Muster kann auch die Zusammensetzung von Anwendungen aus heterogenen Komponenten und Technologien ermöglichen.

Dieses Muster wird "Sidecar" genannt, weil es einem Beiwagen ("sidecar") ähnelt, der an einem Motorrad befestigt ist. Im Muster ist der Sidecar an eine übergeordnete Anwendung angehängt und stellt unterstützende Funktionen für die Anwendung bereit. Das "Sidecar" kann außerdem denselben Lebenszyklus wie die übergeordnete Anwendung haben und zusammen mit der übergeordneten Anwendung erstellt und außer Betrieb genommen werden.

Zu den Vorteilen der Verwendung eines Sidecar-Musters gehören:
- Ein Sidecar ist in Bezug auf Laufzeitumgebung und Programmiersprache unabhängig von seiner primären Anwendung, sodass nicht ein Sidecar pro Sprache entwickelt werden muss. Für Safe Kubernetes erleichtert dies die projektübergreifende Nutzung des Sicherheitsnetzes im Team.
- Das Sidecar kann auf dieselben Ressourcen zugreifen wie die primäre Anwendung. Beispielsweise kann ein Sidecar die Systemressourcen überwachen, die sowohl vom Sidecar als auch von der primären Anwendung verwendet werden.
- Aufgrund der Nähe zur primären Anwendung kommt es bei der Kommunikation zwischen der primären Anwendung und dem Sidecar zu keiner nennenswerten Latenz.
- Selbst für Anwendungen, die keinen Erweiterbarkeitsmechanismus bieten, kann ein Sidecar verwendet werden, um die Funktionalität zu erweitern, indem das Sidecar als eigener Prozess im selben Host oder Subcontainer wie die primäre Anwendung angehängt wird.

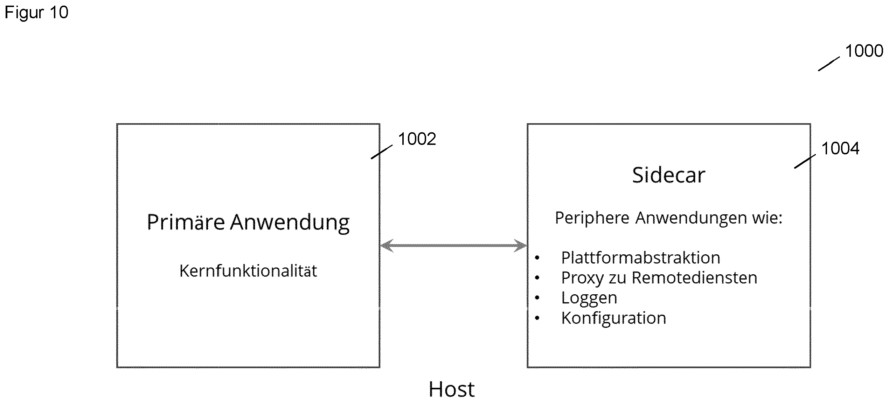

Figur 10 zeigt eine Illustration 1000 des Zusammenspiels zwischen primärer Anwendung 1002 und Sidecar 1004 gemäß einer Ausführungsform, wie sie beispielsweise auf einem Host ablaufen kann. Die primäre Anwendung 1002 kann dabei die Kernfunktionalität bereitstellen. Der Sidecar 1004 kann periphere Anwendungen wie Plattformabstraktion, Proxy zu Remotediensten, Loggen und/ oder Konfiguration bereitstellen.

Aktuelle Lösungen und Produkte für sicherheitsrelevante Funktionen stellen in der Regel monolithische Lösungen dar, die eng mit ihrer Hardware verknüpft sind. Infolgedessen fungieren diese Lösungen als Einheit und sind schwer (neu) zu konfigurieren. Modularisierung und Konfigurationen sind mit aktuellen eng gekoppelten Sicherheitslösungen nicht möglich.

Unter "Safety program" kann eine Sequenz oder Abfolge von Absicherungseinheiten (welche in Kubernetes beispielsweise als eine benutzerdefinierte Resource definiert sein können) verstanden werden.

Unter einem "Automated resource orchestrator" (ARO) kann ein erfindungsgemäßer Operator verstanden werden.

Ein "Domain Scoped Object" (DSO) kann eine benutzerdefinierte Ressourcendefinition sein.

Die Laufzeitumgebung selbst kennt keine Anwendungsspezifika, sondern bietet lediglich allgemeine Funktionen zum Bereitstellen und Skalieren von Arbeitslasten. Sicherheitsanwendungen stellen jedoch strenge und besondere Anforderungen an deren Betrieb, Skalierung und Konfiguration. Daher muss Sicherheit ein integraler Bestandteil der Laufzeitumgebung sein, was erfindungsgemäß erreicht wird, indem Sicherheitswissen in das System eingebettet wird und eine oder mehrere der vier folgenden Funktionen der Laufzeitumgebung kombiniert werden, um eine dynamische Konfiguration und Verwaltung von Sicherheitsanwendungen einzuführen:
1. Domänenbezogenes Objekt, DSO (welcher eine benutzerdefinierte Ressourcendefinition sein kann;)
2. Automatisierter Ressourcen-Orchestrator, ARO (welcher ein Operator sein kann; )
3. Logische Einheit zur Initialisierung (logical unit for initializiation, welche ein mutierender Zulassungs-Webhook sein kann) und
4. Logische Einheit zur Validierung (logical unit for validation, welche ein validierender Zulassungs-Webhook sein kann).

Neben diesen Komponenten kann ein Sidecar (welches auch als Sicherheitswächter ("safety watcher") bezeichnet werden kann), der mit dem Sicherheitssubsystem interagiert, verwendet werden.

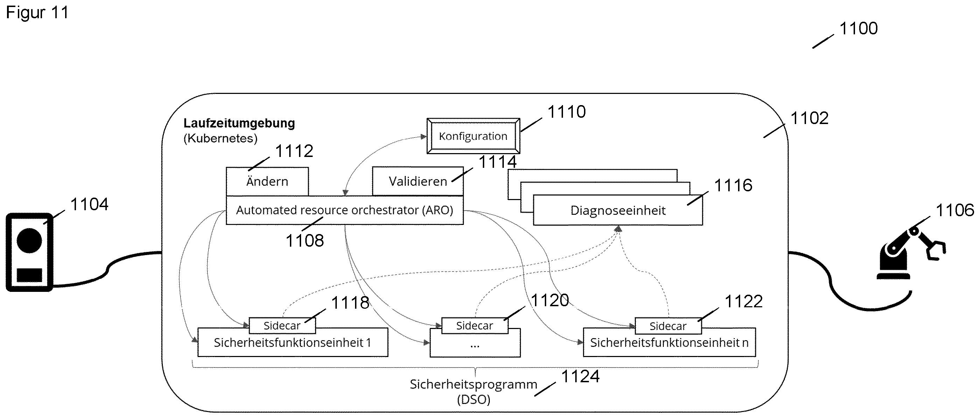

Figur 11 zeigt eine Illustration 1100 einer Hardware- und Software-Architektur gemäß einer Ausführungsform. Ein externer Rechner 1104 kann mit einer Laufzeitumgebung 1102 verbunden sein, die zur Steuerung einer Maschine 1106, beispielsweise eines Industrieroboters eingerichtet ist. In der Laufzeitumgebung 1102 kann ein ARO 1108 auf eine Konfiguration 1110 zugreifen und Sidecars 1118, 1120, 1122 (die wiederum auf eine Diagnoseeinheit 1116 zugreifen können) ändern (1112) oder validieren (1114). So wird ein Sicherheitsprogramm 1124 bereitgestellt.

Allgemein kann eine Laufzeitumgebung auch als Ausführungsumgebung bezeichnet werden.

Ein gewöhnliches Sidecar (welches beispielsweise in Kubernetes kein natives Feature sondern ein Pattern ist), kann periphere Aufgaben koppeln und externalisieren, sodass sich der Anwendungscontainer nicht damit befassen muss.

Der erfindungsgemäße Safety Watcher kann die Einhaltung von Sicherheitscodierungsrichtlinien bei der Interaktion mit dem Sicherheitssubsystem sicherstellen, sicherheitsrelevante Informationen wie Prüfsummen oder Sequenznummern sammeln und/ oder berechnen und strenge (beispielsweise zertifizierte) Schnittstellen zum Sicherheitssubsystem für jede Sicherheitsfunktion im Sicherheitsprogramm bereitstellen.

Der Safety Watcher kann größtenteils die gleiche Funktionalität wie ein regulärer Sidecar erfüllen und sicherheitsrelevante Kommunikation mit dem Sicherheitssubsystem kapseln. Weitere Details hierzu finden sich in der Europäischen Patentanmeldung 22 216 057.4, welche hierin in ihrer Gesamtheit für alle Zwecke durch Bezugnahme aufgenommen wird.

In einer Ausführungsform kann der Sidecar (und damit Sicherheitsfunktionen) während der Laufzeit an Funktionen angefügt oder von diesen entfernt werden, was nicht möglich wäre, wenn der Anwendungscontainer direkt mit dem Sicherheitssubsystem interagieren würde.

An jeder Sicherheitsfunktionseinheit kann ein Sicherheitswächter angebracht sein. Diese kann durch die logische Einheit zur Initialisierung übernommen werden. Die Entscheidung, ob ein Sicherheitswächter erforderlich ist oder nicht, kann auf den Eigenschaften der Logikeinheit (z. B. Name oder Tag) basieren.

Der Safety Watcher kann die Sicherheitsfunktionseinheit überwachen, an die er angeschlossen ist. Der Safety Watcher kann klar definierte Schnittstellen bereit stellen, die die Sicherheitsfunktionseinheit verwendet. Jegliche sicherheitstechnische Überwachung der Sicherheitsfunktionseinheit kann durch die Interaktion mit diesen Schnittstellen erfolgen und auf diesen basieren.

Zu den Überwachungs- und anderen Sicherheitsmaßnahmen gehören unter anderem:
- Überwachung des regelmäßigen Ereignisempfangs, der Verarbeitung und der Zeitfenster;
- Hinzufügen von Metadaten zu jeder Art von Nachricht (z. B. Hash-Summe, Sequenznummer, Zeitstempel, ...);
- Senden von Status- und Ausführungsereignissen an das Sicherheitssubsystem;
- Sicherstellen, dass die Sicherheitsfunktionseinheit nicht durch die Anzahl der empfangenen Nachrichten überfordert wird, indem diese in eine Warteschlange gestellt und jeweils nur eine Nachricht an die Logikeinheit weitergeleitet wird; und
- Übernahme der Konfiguration vom Automated Resource Orchestrator (ARO) und Aktualisierung seines Verhaltens während der Laufzeit ohne erneute Bereitstellung oder Neuerstellung (also ohne Unterbrechung) und dadurch Erzielung einer sicheren dynamischen Konfigurationsänderung während der Laufzeit; dabei können diese neuen Konfigurationen auch auf die Logikeinheit angewendet und basierend auf der neuen Konfiguration überwacht werden.

DSO kann eine Schnittstelle zur Modellierung einer vollständigen Schutzaufgabe als einzelne atomare Einheit bereitstellen, selbst wenn sie mehr als einen Container umfasst. DSO kann mehrere sicherheitsrelevante Eigenschaften oder Metadaten definieren (beispielsweise Aufruf von Graphen, Zeitfenster, Hash-Summen, und/oder Hardware- und Software-Anforderungen). DSO kann eine Folge sicherheitskritischer Container (logische Einheiten) modellieren, die über mehrere (physische) Knoten verteilt sein können. DSO kann auf dem CustomResource Definition (CRD)-Konzept von Kubernetes basieren, das die Erweiterung von Kubernetes um domänenspezifische Ressourcen ermöglicht. DSO kann für ähnliche Sicherheitseigenschaften und Konfigurationen verwendet werden. DSO kann eine Abfolge von einem oder mehreren Pods beschreiben, die gemeinsam eine Schutzaufgabe erfüllen. DSO kann es (aufgrund seiner Spezifikation) ermöglichen, verschiedene logische Einheiten als eine Einheit zu behandeln.

Das Sicherheitsprogramm ist ein domänenbezogenes Objekt (Domain Scoped Object, DSO) und wird als eine atomare Einheit modelliert, um eine Schutzaufgabe auszuführen, beispielsweise die Verhinderung der Kollision eines Menschen und eines Roboters. Obwohl ein Sicherheitsprogramm nicht nur aus mehreren Logikeinheiten besteht, die über mehrere physische Knoten verteilt sein können, kann auch eine sicherheitsrelevante Konfigurationen enthalten sein.

Das Sicherheitsprogramm DSO erweitert die Laufzeitumgebung und ermöglicht es der Laufzeitumgebung zusammen mit dem Bediener, einen Sicherheitskontext zu verstehen und Sicherheit zu einem integralen Bestandteil der Laufzeitumgebung selbst zu machen.

Das Sicherheitsprogramm DSO kann folgende sicherheitsrelevante Inhalte enthalten:
1. Eine Liste aller erforderlichen sicherheitsrelevanten logischen Einheiten. Die Liste kann Informationen enthalten über die erforderlichen Sicherheitsfunktionseinheiten und darüber, welche Diagnoseeinheiten das Sicherheitsprogramm benötigt. Letzteres kann es erlauben, nur die benötigten Teile des Sicherheitssubsystems zu benutzen und bestimmt dessen Umfang im Rahmen des Sicherheitsprogramms.
   und/ oder
2. Konfiguration für das Sicherheitsprogramm. Dazu gehören sowohl allgemeine Konfigurationen als auch hochgradig anwendungsspezifische Konfigurationen, die für jedes Sicherheitsprogramm einzigartig sind, sowie sicherheitsspezifische Konfigurationen wie Mindestreaktionszeiten oder Zeitfenster. Die anwendungsspezifische Konfiguration kann beispielsweise ein Schwellwert für den zulässigen Abstand zwischen einem Menschen und einem Roboter oder eine komplexere Konfiguration sein.

Die allgemeine Konfiguration kann zumindest eine Teilmenge der folgenden Information enthalten:
1. Abhängigkeiten zwischen Sicherheitsfunktionseinheiten (z. B. ein Aufrufgraph);
2. ein durch Programmablaufüberwachung überwachbarer Ablauf des Verarbeitungsablaufs (weitere Details hierzu finden sich in der Europäischen Patentanmeldung 22 216 057.4, welche hierin in ihrer Gesamtheit für alle Zwecke durch Bezugnahme aufgenommen wird);
3. Timeouts oder Zeitfensterkonfiguration;
4. Anforderung an die Laufzeitumgebung (z. B. erforderliche Hardware - zwei physische Knoten mit unterschiedlicher Architektur sind erforderlich, um ein Dual-Channel-System einzurichten; wenn diese nicht erfüllt sind, verweigert der Betreiber die Erstellung des Programms);
5. Die Anforderungen des Sicherheitsprogramms an die Ausführungsumgebung. Die Anforderungen können anwendungsspezifisch sein und können sich beispielsweise sowohl auf Hardware- als auch auf Softwareanforderungen der Laufzeitumgebung auswirken, wie beispielsweise:
   - Version der Laufzeitumgebung;
   - Modus oder Bereitstellung der Laufzeitumgebung - zum Beispiel Air-Gap, mit Netzwerkverbindung, und/ oder Hochverfügbarkeitsmodus;
   - Hardware der Laufzeitumgebung - zum Beispiel die Verfügbarkeit spezieller GPU-Hardware, mindestens drei physische Knoten, Rechenknoten mit unterschiedlichen Architekturen zur Etablierung einer Mehrkanalkommunikation im Sicherheitsbereich.
6. Liste von Abhängigkeiten, von denen das Sicherheitsprogramm abhängt, um ordnungsgemäß und sicher ausgeführt zu werden, die jedoch keine Hardwareo-der Softwareanforderung darstellen, z. B. Messaging-Infrastruktur.

Es besteht auch die Möglichkeit, mehr als ein DSO zu verwenden. Andere DSOs können beispielsweise das Sicherheitsprogramm DSO beeinflussen, indem sie Befehle wie Neustart oder Pause definieren.

CRDs können die Kubernetes-Funktionalität erweitern (z. B. um CRDs zu definieren und zu verwalten, die auf ihre spezifischen Anwendungsanforderungen zugeschnitten sind). CRDs können eine deklarative Anwendungskonfiguration bereitstellen. CRDs können Automatisierung und Abstraktion bereitstellen und die Automatisierung und Verwaltung von Kubernetes-Ressourcen verwalten.

DSOs können auf die Sicherheit zugeschnittene Konfigurationen bereitstellen, die von der Laufzeitumgebung und sicherheitsspezifischen Informationen wie Aurufgraphen, Zeitfenstern oder Hash-Summen verwaltet werden.

DSOs können die Sicherheit sehr gut erreichen, da ein erwarteter Zustand deklariert und der tatsächliche Zustand anhand der Sicherheitserwartungen überprüft werden kann. DSOs können die API der Laufzeitumgebung erweitern und der ARO kann sie einfach wie jede andere Laufzeitressource verwalten.

ConfigMap (welches eine Kubernetes-Funktion ist ) oder externe Config Stores (welche durch Drittanbieter-Lösungen bereitgestellt werden kann) sind nicht geeignet, weil:
1. Weder die Kubernetes Config Map noch Konfigurationsspeicher von Drittanbietern es ermöglichen, die Laufzeitumgebung mit anwendungsspezifischem (Sicherheits-)Wissen zu erweitern,
2. Die Verwendung eines externen/Drittanbieter-Konfigurationsspeichers erhöht die Komplexität und erfordert zusätzliche Ressourcen, die in einer Edge-Umgebung begrenzt sind. Da externe Speicher nicht vollständig von Kubernetes verwaltet werden, müssen außerdem Anstrengungen unternommen werden, um sie genauso belastbar zu machen wie die von Kubernetes verwalteten Ressourcen.
3. Keine der beiden Alternativen ermöglicht es, Sicherheit zu einem integralen Bestandteil von Kubernetes zu machen, sondern nur Konfigurationen wie jede andere, die nicht geeignet sind, da Sicherheit viel strengere Konfigurationen erfordert.

Der ARO kann als logische Einheit innerhalb der Laufzeitumgebung laufen, kann aber auch außerhalb der Ausführungsumgebung laufen und die gleiche Aufgabe wie eine eigenständige Binäranwendung ausführen. Letztere Bereitstellungsoption kann in Fällen wichtig sein, in denen die Funktionalität von Betriebskenntnissen für die Ausführung auf spezieller Hardware erforderlich ist, z. B. sicherheitszertifizierter Hardware, die nicht Teil der Laufzeitumgebung ist. Er ist daher eng an die Laufzeitumgebung gekoppelt und beobachtet diese. Jegliche Interaktion mit Laufzeitressourcen wird vom ARO beobachtet und verarbeitet. Mögliche Interaktionen sind jeweils das Erstellen, Aktualisieren, Löschen und Fortführen einer Ressource, sie sind jedoch nicht auf diese Interaktionstypen beschränkt. Die Frage, ob die Handhabung einer Interaktion notwendig ist oder wie die Handhabung aussieht, ist anwendungsspezifisch (zum Beispiel die Erstellung einer zweiten Instanz einer Logikeinheit, die Abstandswerte zwischen einem Menschen und einem Roboter mit einem Schwellenwert vergleicht). Je nach Anwendung kann diese Interaktion verweigert oder zugelassen werden. Dies kann auch mit beliebigen Regeln kombiniert werden (beispielsweise, dass die zweite Instanz auf einem anderen physischen Knoten eingeplant werden muss).

Der ARO ermöglicht es, das Sicherheitsprogramm als eine einzelne atomare Einheit zu behandeln, obwohl es nicht nur aus mehreren logischen Einheiten besteht, die über mehrere physische Knoten verteilt sein können, und auch sicherheitsrelevante Konfigurationen enthält.

Daher ermöglicht der ARO eine Dynamik in der Laufzeitumgebung, die über die bereits vorhandenen undynamischen Fähigkeiten der Laufzeitumgebung hinausgeht - insbesondere wie im Folgenden erläutert.

Aufgrund der operativen Kenntnisse des ARO über Sicherheitsprogramme können ein oder mehrere Sicherheitsprogramme skaliert, bereitgestellt und verwaltet werden und so eine oder mehrere Sicherheitsanwendungen in einem Cluster erstellt werden.

Der ARO kann die automatische Injektion des Safety Mesh Safety Watchers einführen, um Logikeinheiten die Interaktion mit dem Sicherheitssubsystem zu ermöglichen und damit die Grundlage für die sichere Ausführungsüberwachung zu schaffen. Weitere Details hierzu finden sich in der Europäischen Patentanmeldung 22 216 057.4, welche hierin in ihrer Gesamtheit für alle Zwecke durch Bezugnahme aufgenommen wird.

Der ARO kann sowohl erforderliche Ressourcen (neu) erstellen als auch vorhandene Ressourcen aktualisieren. Dies gilt nicht nur für "Softwareressourcen" wie logische Einheiten oder Sicherheitskonfigurationen, sondern auch für physische und virtuelle Rechenknoten, die bereits mit der Laufzeitumgebung verbunden sind oder manuell mit der Laufzeitumgebung verbunden werden. Darüber hinaus können auch Vorgänge (Erstellung, Änderung, Löschung usw.) von Ressourcen verweigert werden, was nicht nur die Durchsetzung von Compliance-Richtlinien ermöglicht, sondern auch Sicherheitswerte hinzufügt, z. B. das Zulassen nur von Behörden zertifizierter Hardware oder Logikeinheiten. Dies kann durch den Vergleich der Hash-Summen des Images einer Logikeinheit mit ihrem Betriebswissen erfolgen. Dies ist nicht Teil der Laufzeitumgebung selbst und kann nicht Teil einer sofort einsatzbereiten Laufzeitumgebung sein, da hierfür detaillierte Kenntnisse der Anwendung und ihrer Bedienung erforderlich sind.

Der Automated Resource Orchestrator (ARO) kann vom Kubernetes-Operatormuster (also von kodifiziertem Betriebswissen für die Verwaltung einer Anwendung) inspiriert sein. Der ARO kann dazu dienen, die Ressourcen der Laufzeitumgebung zu überwachen. Der ARO kann sich auf den Betrieb einer oder mehrerer Sicherheitsanwendungen (also Sicherheitsprogramm-DSOs) konzentrieren (also kodifiziertes Betriebswissen und damit mehr als nur Erstellen, Löschen, Aktualisieren von DSOs bereitstellen, was eine dynamische Konfiguration logischer Einheiten entsprechend den Sicherheitsanforderungen ermöglicht).

Der ARO kann sich mit Aspekten der Erstellung, Löschung und Aktualisierung spezifischer benutzerdefinierter Ressourcen befassen, kann aber auch andere Kubernetes-Ressourcen sowie betriebliches Wissen, das vom Entwickler des Betreibers kodifiziert wird, umfassen.

Der Schwerpunkt des ARO liegt auf der dynamischen Aktualisierung von (Sicherheits-)Konfigurationen logischer Einheiten während der Laufzeit basierend auf Sicherheitsanforderungen. Der ARO kann die Ressourcen der Laufzeitumgebung (nicht nur des DSO) überwachen. Der ARO kann als Container innerhalb der Laufzeitumgebung oder außerhalb der Laufzeitumgebung als Container oder eigenständige Binäranwendungen ausgeführt werden.

Ein normaler Operator (bei dem es sich nicht um eine native Kubernetes-Funktion, sondern um ein Muster handelt) kann komplexe, zustandsbehaftete Anwendungen in einem Kubernetes-Cluster verwalten (was als "kodiertes Betriebswissen" bezeichnet werden kann). Der normale Operator kann normalerweise als Container bereitgestellt werden, der innerhalb des Clusters ausgeführt wird und dieselbe Hardware wie die Anwendungscontainer nutzt. Ein Operator verwaltet eine Anwendung (z. B. stellt ein Datenbankbetreiber eine Datenbank bereit und verwaltet sie).

Bei der Sicherheit handelt es sich um strenge und komplexe Regeln, die sowohl zur Laufzeit als auch während der Initialisierungs-, Wartungs- oder Stoppphasen überprüft und kontrolliert werden müssen. Darüber hinaus gelten für Skalierungssicherheitsanwendungen die gleichen strengen Regeln. Der ARO verwaltet und/oder skaliert also nicht nur ein oder mehrere Sicherheitsprogramme, sondern setzt auch Sicherheitsanforderungen durch und erfüllt diese. Der ARO kann auch als Container innerhalb des Clusters ausgeführt werden und die gleiche Hardware mit den Anwendungscontainern teilen. Darüber hinaus ist der ARO auch so konzipiert, dass es außerhalb der Laufzeitumgebung als Binäranwendung (oder als Container) ausgeführt werden kann. Der Betrieb außerhalb der Laufzeitumgebung hat folgende Vorteile: Entkopplung von Entwicklung und Betrieb des Operators von der Diagnose (weitere Details hierzu finden sich in der Europäischen Patentanmeldung 22 216 057.4, welche hierin in ihrer Gesamtheit für alle Zwecke durch Bezugnahme aufgenommen wird); und Möglichkeit, den Bediener extern auf spezieller Sicherheitshardware einzusetzen. Die Entwicklung des Operators kann auch bei einer Bereitstellung innerhalb des Clusters entkoppelt sein, da die Diagnoseeinheiten (wie sie beispielsweise in der der Europäischen Patentanmeldung 22 216 057.4 gezeigt sind) und der Operator unterschiedliche Softwareartefakte in unterschiedlichen Containern sein können.

Ein oder mehrere Sicherheitsprogramme können gleichzeitig unter Berücksichtigung normativer oder regulatorischer Sicherheitsregeln (z. B. laufen nur zertifizierte Container im Cluster) ausgeführt werden. Um die Verwaltung und Isolierung mehrerer Sicherheitsprogramme zu erreichen, kann außerdem für jedes Sicherheitsprogramm ein separater Namensraum erstellt werden.

Die logische Einheit für die Initialisierung (LU-I) kann jede eingehende Anforderung ändern, bevor die Aktion ausgeführt wird. Insbesondere dient die LU-I dazu:
- Ressourcennamen (insbesondere Konfigurationsnamen) zu standardisieren;
- einen Sicherheitsbeobachter in eine Sicherheitsfunktionseinheit einzubinden. Die Entscheidung, ob ein Sicherheitsbeobachter in die Sicherheitsfunktionseinheit eingebunden werden soll, kann Teil der Betriebskonfiguration sein.
- hinzufügen von Ressourcenbeschränkungen zu Containern. Jeder Container verfügt über seinen eigenen Anteil an CPU und Speicher. Diese Einschränkungen werden von der LU-I auch unter Berücksichtigung der Anforderungen des Sicherheitsprogramms hinzugefügt.
- hinzufügen einer einfachen Standardkonfiguration, falls diese fehlt, z. B. Protokollebene.

Die LU-I kann als separate logische Einheit oder als Teil des ARO ausgeführt werden. Wie das ARO kann die logische Einheit für die Initialisierung innerhalb oder außerhalb der Laufzeitumgebung ausgeführt werden, wenn sie als separate logische Einheit ausgeführt wird.

Mutierende Zulassungs-Webhooks können eingehende Ressourcenkonfigurationen automatisch ändern oder verbessern, bevor sie in den Cluster aufgenommen werden.

Die LU-I kann es ermöglichen, den Safety Watcher beim Erstellen, Aktualisieren oder Löschen dynamisch zu anderen Containern hinzuzufügen oder zu entfernen. Damit kann es auch möglich sein, unterschiedliche Sicherheitswächter nach beliebigen (Sicherheits-)Kriterien zu wechseln/anzubringen.

Alternativ gibt auch andere Möglichkeiten, das gleiche Ergebnis zu erzielen (z. B. das manuelle Hinzufügen des Safety Watchers zur Anwendungscontainer-Bereitstellung).

Die logische Einheit zur Validierung (LU-V) wird nach der LU-I ausgeführt und ist der letzte Schritt vor der Erstellung der Ressource in der Laufzeitumgebung. Sie überprüft die Konformität der zu erstellenden oder zu ändernden Ressource. Dies kann beispielsweise eine Überprüfung sein, ob das Image des Containers einer Sicherheitsfunktionseinheit eine erwartete Hash-Summe aufweist, die mit der Hash-Summe einer Version des Images übereinstimmt, die von einer benannten Stelle zertifiziert wurde.

Die logische Einheit für die Validierung (LU-V) kann als separate logische Einheit oder als Teil des ARO ausgeführt werden. Wie der ARO kann die logische Einheit für die Initialisierung innerhalb oder außerhalb der Laufzeitumgebung ausgeführt werden, wenn sie als separate logische Einheit ausgeführt wird. Validierungs-Zulassungs-Webhooks können Richtlinien durchsetzen und Ressourcenkonfigurationen validieren, bevor sie in den Cluster aufgenommen werden. Validierungs-Zulassungs-Webhooks stellen sicher, dass die Ressourcen vordefinierten Regeln und Einschränkungen entsprechen, und tragen so zur Aufrechterhaltung der Konsistenz und Sicherheit im Cluster bei. Wenn der Webhook keine positive Antwort gibt, wird die Ressource nicht auf Kubernetes bereitgestellt.

Die logische Einheit zur Validierung (LU-V) kann Bereitstellungen hinsichtlich der Sicherheitskonformität validieren, bevor sie in der Laufzeitumgebung bereitgestellt werden. Ihr Hauptzweck besteht darin, zu überprüfen, ob die Konfiguration des Sicherheitsprogramms mit der beabsichtigten Struktur übereinstimmt - z. B. einen einzelnen Wurzelknoten, keine zirkulären Referenzen, konforme/zertifizierte Containerbilder usw.

In einer Ausführungsform wird zunächst eine Ressourcen-Interaktion (beispielsweise manuell oder durch den ARO; beispielsweise zum Erzeugen, Löschen oder Ändern von Ressourcen) durchgeführt. Wird dann eine Änderung beantragt (welches beispielsweise durch die LU-I erfolgen kann, und welches ein Standardisieren und Einfügen eines Sidecars und/ oder Hinzufügen von Ressourcenbeschränkungen und Standardeinstellungen enthalten kann), wie eine Validierung durchgeführt (welches durch die LU-V erfolgen kann, und welches das Valideren der Ressource, beispielsweise durch Überprüfen von Versionen und/ oder Hash-Summen enthalten kann), bevor die Änderung an die Laufzeitumgebung weitergegeben wird.

Gemäß verschiedenen Ausführungsformen kann eine dynamische Konfiguration bestehender Sicherheitslösungen zur Laufzeit bereitgestellt werden.

Gemäß verschiedenen Ausführungsformen kann Sicherheitswissen direkt in die Laufzeitumgebung eingebettet werden und es kann weiterhin möglich sein, die Laufzeitumgebung als normale Laufzeitumgebung für nicht sicherheitsrelevante Workloads zu verwenden. Dies kann eine Verschmelzung von Sicherheit und Automatisierung ermöglichen.

Die Sicherheitsprogramme DSO und ARO enthalten das anwendungsspezifische Wissen.

In einer Ausführungsform kann ARO als Teil einer Laufzeitrisikobewertung verwendet werden, um elastische Sicherheitsmaßnahmen innerhalb der Laufzeitumgebung zu ermöglichen.

### Bezugszeichenliste

- 10: Sicherheitsvorrichtung
- 12: Maschine
- 14: Sensor
- 16: Hardwarekomponente
- 18: Maschinensteuerung
- 20: Block zusammengefasster Sensoren
- 22: Ausführungsumgebung
- 24: Master
- 26: Rechenknoten
- 28: Logikeinheit
- 30: Unterknoten
- 32: Sicherheitsfunktionseinheit
- 34: Diagnoseeinheit
- 36: Knotenmanagereinheit
- 38: Automatisierungseinheit
- 40: Datenbank
- 42: API-Server
- 44: Controller Manager
- 700: Illustration von sicherem Kubernetes gemäß einer Ausführungsform
- 702: Ausführungsumgebung
- 704: Logikeinheit
- 706: Automatisierungseinheit
- 708: Absicherungseinheit
- 710: Diagnoseeinheit
- 800: Illustration von sicherem Kubernetes gemäß einer Ausführungsform
- 802: Ausführungsumgebung
- 804: Diagnoseeinheit
- 806: externen Quelle
- 808: Automatisierungseinheit
- 810: Absicherungseinheit
- 812: Automatisierungseinheit
- 814: externes Gerät
- 900: Illustration einer Software-Architektur gemäß einer Ausführungsform
- 902: Kube Api Server
- 904: Client-Watch
- 906: Informer
- 908: Objekt-Cache
- 910: Handler
- 912: Work Queue
- 914: Reconcile-Logik
- 1000: Illustration des Zusammenspiels zwischen primärer Anwendung und Sidecar gemäß einer Ausführungsform
- 1002: primäre Anwendung
- 1004: Sidecar
- 1100: Illustration einer Hardware- und Software-Architektur gemäß einer Ausführungsform
- 1102: Laufzeitumgebung
- 1104: externer Rechner
- 1106: Maschine
- 1108: ARO
- 1100: Konfiguration
- 1112: Ändern
- 1114: Validieren
- 1116: Diagnoseeinheit
- 1118: Sidecar
- 1120: Sidecar
- 1122: Sidecar
- 1124: Sicherheitsprogramm

## Patentansprüche

1. Sicherheitsvorrichtung (10) zur Überwachung mindestens einer Maschine (12), die mindestens einen Sensor (14) zum Erzeugen von Sensordaten zu der Maschine (12) sowie eine mindestens mittelbar mit dem Sensor (14) und der Maschine (12) verbundene Verarbeitungseinheit für die Sensordaten aufweist, die als Ausführungsumgebung (22) mit mindestens einem Rechenknoten (26) sowie dafür ausgebildet ist, mindestens eine Logikeinheit (28) auf dem Rechenknoten (26) ablaufen zu lassen, wobei mindestens eine Logikeinheit (28) mindestens eine Sicherheitsfunktionseinheit (32) zur sicherheitsgerichteten Auswertung der Sensordaten umfasst, um im Falle eines sicherheitsrelevanten Ereignisses ein Sicherheitssignal an die Maschine (12) zum Auslösen einer Sicherheitsreaktion auszugeben,
wobei die Verarbeitungseinheit weiterhin dafür ausgebildet ist, basierend auf einer Sicherheitsaufgabe Logikeinheiten (28) zu erzeugen, zu modifizieren, und/ oder aufzulösen;
wobei die Sicherheitsvorrichtung (10) ferner aufweist eine Überwachungsvorrichtung, eingerichtet zum Sicherstellen einer Einhaltung von Sicherheitscodierungsrichtlinien, und/ oder Ermitteln von sicherheitsrelevanten Informationen, und/ oder Bereitstellen von Schnittstellen für jede Sicherheitsfunktionseinheit (32);
wobei die Sicherheitsvorrichtung (10) weiterhin dafür ausgebildet ist, Überwachungsvorrichtungen dynamisch zu erzeugen, hinzuzufügen, oder zu entfernen; und
wobei die Sicherheitsvorrichtung (10) weiterhin dafür ausgebildet ist, Ressourcen für sicherheitsrelevante Aufgaben zu validieren.

2. Sicherheitsvorrichtung (10) nach Anspruch 1,
wobei die Sicherheitsaufgabe benutzerdefiniert ist.

3. Sicherheitsvorrichtung (10) nach Anspruch 1,
wobei die Sicherheitsaufgabe zur Laufzeit der Sicherheitsvorrichtung (10) ermittelt wird.

4. Sicherheitsvorrichtung (10) nach einem der vorstehenden Ansprüche, wobei die Logikeinheiten (28) basierend auf der Sicherheitsaufgabe erzeugt, modifiziert, und/ oder aufgelöst werden durch einen automatisierten Ressourcen-Orchestrator, der innerhalb der Ausführungsumgebung (22) bereitgestellt ist.

5. Sicherheitsvorrichtung (10) nach einem der Ansprüche 1 bis 3,
wobei die Logikeinheiten (28) basierend auf der Sicherheitsaufgabe erzeugt, modifiziert, und/ oder aufgelöst werden durch einen automatisierten Ressourcen-Orchestrator, der außerhalb der Ausführungsumgebung (22) bereitgestellt ist.

6. Sicherheitsvorrichtung (10) nach einem der vorstehenden Ansprüche, ferner aufweisend:
eine Schnittstelle zur Modellierung einer Schutzaufgabe als atomare Einheit.

7. Sicherheitsvorrichtung (10) nach einem der vorstehenden Ansprüche,
wobei die Ausführungsumgebung (22) auf mindestens einem Sensor (14), einer speicherprogrammierbaren Steuerung, einer Maschinensteuerung (18), einer Rechnervorrichtung in einem lokalen Netzwerk, einen Edge-Device und/oder in einer Cloud implementiert ist; und/oder
wobei die Ausführungsumgebung (22) dafür ausgebildet ist, Rechenknoten (26) einzubinden und/oder auszuschließen.

8. Sicherheitsvorrichtung (10) nach einem der vorstehenden Ansprüche, wobei mindestens eine Logikeinheit (28) als Automatisierungseinheit (38) ausgebildet ist, die aus den Sensordaten eine für eine Automatisierungsaufgabe relevante Information und/oder einen Steuerungsbefehl für die Maschine (12) erzeugt, wobei Information und Steuerungsbefehl nicht sicherheitsrelevant sind.

9. Sicherheitsvorrichtung (10) nach einem der vorstehenden Ansprüche, wobei der mindestens eine Sensor (14) als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei die Sicherheitsvorrichtung (10) insbesondere eine Vielzahl gleicher oder unterschiedlicher Sensoren (14) aufweist.

10. Anordnung aufweisend die Sicherheitsvorrichtung (10) nach einem der vorstehenden Ansprüche und die Maschine (12).

11. Sicherheitsverfahren zur Überwachung mindestens einer Maschine (12), bei dem mindestens einen Sensor (14) Sensordaten zu der Maschine (12) erzeugt und eine mindestens mittelbar mit dem Sensor (14) und der Maschine (12) verbundene Verarbeitungseinheit für die Sensordaten als Ausführungsumgebung (22) mindestens eine Logikeinheit (28) auf einem Rechenknoten (26) ablaufen lässt, wobei mindestens eine Logikeinheit (28) mindestens eine Sicherheitsfunktionseinheit (32) die Sensordaten sicherheitsgerichtet auswertet, um im Falle eines sicherheitsrelevanten Ereignisses ein Sicherheitssignal an die Maschine (12) zum Auslösen einer Sicherheitsreaktion auszugeben,
wobei basierend auf einer Sicherheitsaufgabe Logikeinheiten (28) erzeugt, modifiziert, und/ oder aufgelöst werden;
wobei eine Einhaltung von Sicherheitscodierungsrichtlinien sichergestellt wird, und/ oder sicherheitsrelevante Informationen ermittelt werden, und/ oder Schnittstellen für jede Sicherheitsfunktionseinheit (32) bereitgestellt werden;
wobei Überwachungsvorrichtungen dynamisch erzeugt, hinzuzugefügt, oder entfernt werden; und
wobei Ressourcen für sicherheitsrelevante Aufgaben validiert werden.

12. Computerlesbares Speichermedium, umfassend Befehle, die bei der Ausführung durch einen Computer diesen veranlassen, das Sicherheitsverfahren nach Anspruch 11 auszuführen.

## Claims

1. A safety device (10) for monitoring at least one machine (12), said safety device (10) having at least one sensor (14) for generating sensor data on the machine (12) and a processing unit for the sensor data that is connected at least indirectly to the sensor (14) and to the machine (12), that is configured as a performance environment (22) having at least one computing node (26), and that is configured to allow at least one logic unit (28) to run on the computing node (26), wherein at least one logic unit (28) comprises at least one safety function unit (32) for a safety-directed evaluation of the sensor data in order, in the case of a safety-related event, to output a safety signal to the machine (12) for triggering a safety response,
wherein the processing unit is furthermore configured to generate, to modify and/or to resolve logic units (28) based on a safety task;
wherein the safety device (10) further has a monitoring device configured to ensure compliance with safety coding guidelines and/or to determine safety-related information and/or to provide interfaces for each safety function unit (32);
wherein the safety device (10) is furthermore configured to dynamically create, add or remove monitoring devices; and
wherein the safety device (10) is furthermore configured to validate resources for safety-related tasks.

2. A safety device (10) according to claim 1,
wherein the safety task is user-defined.

3. A safety device (10) according to claim 1,
wherein the safety task is determined at the runtime of the safety device (10).

4. A safety device (10) according to any one of the preceding claims,
wherein the logic units (28) are generated, modified and/or resolved based on the safety task by an automated resource orchestrator which is provided within the performance environment (22).

5. A safety device (10) according to any one of the claims 1 to 3,
wherein the logic units (28) are generated, modified and/or resolved based on the safety task by an automated resource orchestrator which is provided outside the performance environment (22).

6. A safety device (10) according to any one of the preceding claims, further having:
an interface for modeling a protection task as an atomic unit.

7. A safety device (10) according to any one of the preceding claims,
wherein the performance environment (22) is implemented on at least one sensor (14), on a programmable logic controller, on a machine controller (18), on a computer device in a local network, an edge device and/or in a cloud; and/or
wherein the performance environment (22) is configured to integrate and/or to preclude computing nodes (26).

8. A safety device (10) according to any one of the preceding claims,
wherein at least one logic unit (28) is configured as an automation unit (38) which generates information relevant for an automation task and/or a control command for the machine (12) from the sensor data, wherein the information and the control command are not relevant to safety.

9. A safety device (10) according to any one of the preceding claims,
wherein the at least one sensor (14) is configured as an optoelectronic sensor, in particular a light barrier, a light sensor, a light grid, a laser scanner, an FMCW LIDAR or a camera, as an ultrasound sensor, an inertia sensor, a capacitive sensor, a magnetic sensor, an inductive sensor, a UWB sensor, or as a process parameter sensor, in particular a temperature sensor, a throughflow sensor, a filling level sensor or a pressure sensor, and wherein the safety device (10) in particular has a plurality of the same or different sensors (14).

10. An arrangement having the safety device (10) according to any one of the preceding claims and the machine (12).

11. A safety method (10) for monitoring at least one machine (12) in which at least one sensor (14) generates sensor data on the machine (12) and a processing unit for the sensor data that is connected at least indirectly to the sensor (14) and to the machine (12) allows, as a performance environment (22), at least one logic unit (28) to run on the computing node (26), wherein at least one logic unit (28) comprises at least one safety function unit (32) which evaluates the sensor data in a safety-directed manner in order, in the case of a safety-related event, to output a safety signal to the machine (12) for triggering a safety response,
wherein logic units (28) are generated, modified and/or resolved based on a safety task;
wherein compliance with safety coding guidelines is ensured and/or safety-related information is determined and/or interfaces are provided for each safety function unit (32);
wherein monitoring devices are dynamically created, added, or removed; and
wherein resources for safety-related tasks are validated.

12. A computer readable storage medium comprising commands which, on execution by a computer, cause it to carry out the safety method according to claim 11.

## Revendications

1. Dispositif de sécurité (10) pour surveiller au moins une machine (12), qui comprend au moins un capteur (14) destiné à générer des données de capteur relatives à la machine (12) et une unité de traitement des données de capteur qui est connectée au moins indirectement au capteur (14) et à la machine (12) et qui est conçue comme un environnement d'exécution (22), muni d'au moins un nœud de calcul (26), et destinée à faire exécuter au moins une unité logique (28) sur le nœud de calcul (26), au moins une unité logique (28) comprenant au moins une unité fonctionnelle de sécurité (32) destinée à évaluer les données du capteur de manière orientée sécurité, afin d'émettre, en cas d'événement pertinent pour la sécurité, un signal de sécurité vers la machine (12) pour déclencher une réaction de sécurité, l'unité de traitement étant en outre conçue pour générer, modifier et/ou supprimer des unités logiques (28) sur la base d'une tâche de sécurité ;
dans lequel
le dispositif de sécurité (10) comprend en outre un dispositif de surveillance conçu pour assurer le respect des directives de codage de sécurité et/ou pour déterminer les informations pertinentes pour la sécurité et/ou pour fournir des interfaces pour chaque unité fonctionnelle de sécurité (32) ;
le dispositif de sécurité (10) est en outre conçu pour générer, ajouter ou retirer de manière dynamique des dispositifs de surveillance ; et
le dispositif de sécurité (10) est en outre conçu pour valider des ressources pour des tâches pertinentes pour la sécurité.

2. Dispositif de sécurité (10) selon la revendication 1,
dans lequel la tâche de sécurité est définie par l'utilisateur.

3. Dispositif de sécurité (10) selon la revendication 1,
dans lequel la tâche de sécurité est déterminée pendant le temps de fonctionnement du dispositif de sécurité (10).

4. Dispositif de sécurité (10) selon l'une des revendications précédentes, dans lequel les unités logiques (28) sont générées, modifiées et/ou supprimées sur la base de la tâche de sécurité par un orchestrateur de ressources automatisé qui est prévu à l'intérieur de l'environnement d'exécution (22).

5. Dispositif de sécurité (10) selon l'une des revendications 1 à 3,
dans lequel les unités logiques (28) sont générées, modifiées et/ou supprimées sur la base de la tâche de sécurité par un orchestrateur de ressources automatisé qui est prévu à l'extérieur de l'environnement d'exécution (22).

6. Dispositif de sécurité (10) selon l'une des revendications précédentes, comprenant en outre :
une interface pour modéliser une tâche de protection en tant qu'unité atomique.

7. Dispositif de sécurité (10) selon l'une des revendications précédentes,
dans lequel l'environnement d'exécution (22) est implémenté sur au moins un capteur (14), un appareil programmable industriel, une commande de machine (18), un dispositif informatique dans un réseau local, un dispositif périphérique et/ou dans un cloud ; et/ou
l'environnement d'exécution (22) est conçu pour intégrer et/ou exclure des nœuds de calcul (26).

8. Dispositif de sécurité (10) selon l'une des revendications précédentes, dans lequel au moins une unité logique (28) est conçue comme une unité d'automatisation (38) qui génère, à partir des données du capteur, une information pertinente pour une tâche d'automatisation et/ou une instruction de commande pour la machine (12), l'information et l'instruction de commande n'étant pas pertinentes pour la sécurité.

9. Dispositif de sécurité (10) selon l'une des revendications précédentes,
dans lequel ledit au moins un capteur (14) est conçu comme un capteur optoélectronique, en particulier comme une barrière lumineuse, un capteur photoélectrique, une grille lumineuse, un scanner laser, un lidar FMCW ou une caméra, comme un capteur à ultrasons, un capteur à inertie, un capteur capacitif, un capteur magnétique, un capteur inductif, un capteur UWB ou comme un capteur de grandeur de processus, en particulier comme un capteur de température, de débit, de niveau de remplissage ou de pression, et
le dispositif de sécurité (10) comprend en particulier une pluralité de capteurs (14) identiques ou différents.

10. Ensemble comprenant le dispositif de sécurité (10) selon l'une des revendications précédentes et la machine (12).

11. Procédé de sécurité pour surveiller au moins une machine (12), dans lequel au moins un capteur (14) génère des données de capteur relatives à la machine (12), et une unité de traitement des données de capteur, connectée au moins indirectement au capteur (14) et à la machine (12), fait exécuter au moins une unité logique (28) sur un noeud de calcul (26), en tant qu'environnement d'exécution (22),
au moins une unité logique (28) comprend au moins une unité fonctionnelle de sécurité (32) qui évalue les données du capteur de manière orientée sécurité afin d'émettre, en cas d'événement pertinent pour la sécurité, un signal de sécurité vers la machine (12) pour déclencher une réaction de sécurité,
des unités logiques (28) sont générées, modifiées et/ou supprimées sur la base d'une tâche de sécurité ;
le respect des directives de codage de sécurité est assuré, et/ou des informations pertinentes pour la sécurité sont déterminées, et/ou des interfaces sont fournies pour chaque unité fonctionnelle de sécurité (32) ;
des dispositifs de surveillance sont générés, ajoutés ou retirés de manière dynamique ; et
des ressources pour des tâches pertinentes pour la sécurité sont validées.

12. Support de stockage lisible par ordinateur, comprenant des instructions qui, lorsqu'elles sont exécutées par un ordinateur, amènent celui-ci à mettre en œuvre le procédé de sécurité selon la revendication 11.
